(19) Europäisches Patentamt
European Patent Office
Office européen des brevets

(11) EP 0 327 349 B1

(12) EUROPEAN PATENT SPECIFICATION

(45) Date of publication and mention of the grant of the patent:
**10.04.1996 Bulletin 1996/15**

(51) Int. Cl.[6]: **C07C 69/92**, C09K 19/20, C07C 69/82, C07C 69/90, C07C 69/94

(21) Application number: **89300991.0**

(22) Date of filing: **01.02.1989**

# (54) Liquid crystal compounds

Flüssigkristallverbindungen

Composés liquides cristallins

(84) Designated Contracting States:
**DE FR GB**

(30) Priority: **02.02.1988 JP 21159/88**
**02.02.1988 JP 21160/88**

(43) Date of publication of application:
**09.08.1989 Bulletin 1989/32**

(73) Proprietor: **Showa Shell Sekiyu Kabushiki Kaisha**
**Tokyo 100 (JP)**

(72) Inventors:
- **Suzuki, Yoshiichi**
  **Chiyoda-ku Tokyo (JP)**
- **Mogamiya, Hiroyuki**
  **Chiyoda-ku Tokyo (JP)**
- **Kawamura, Ichiro**
  **Chiyoda-ku Tokyo (JP)**

(74) Representative: **Quest, Barry et al**
**Wilson, Gunn, M'Caw,**
**41-51 Royal Exchange,**
**Cross Street**
**Manchester M2 7BD (GB)**

(56) References cited:
**EP-A- 0 294 852**

- **JAPANESE JOURNAL OF APPLIED PHYSICS, vol. 26, part 1, supplement 26-2, 1987, pages 101-103; H. TANGUCHI et al.: "Electrical and optical properties of fluorinated ferroelectric liquid crystal"**
- **CHEMISTRY EXPRESS, vol. 2, no. 1, 1987, pages 53-56, Kinki Chemical Society, JP; K. YOSHINO et al.: "Fluorinated ferroelectric liquid crystal and its dielectric property"**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 327 349 B1

Printed by Rank Xerox (UK) Business Services
2.10.4/3.4

## Description

The invention relates to new ferroelectric or high dielectric, chiral smectic liquid crystal compounds to be used for a display element or an electrooptical element, with utilizing the particular property that the molecular orientation thereof can be controlled in an electric field.

The liquid crystal display element has been widely used for various purposes as well known owing to desired properties thereof such as low electric tension workability, low electric energy consumption, displayability in a thin form, and light recepting type causing less eyestrain.

A liquid crystal display device of twisted nematic (TN) type is, however, not satisfactory in that the speed of response is too slow in comparison with display devices of light emitting type such as a cathode ray tube (CRT) so that use thereof is rather restricted for that purpose.

As an improvement of said property of such nematic liquid crystals, R.B. Meyer et al succeeded in the year of 1975 to synthesize decylooxybenzylidene-amino-2-methylbutyl cinamates (DOBAMBC) as ferroelectric liquid crystals. In the year of 1980, Clark and Lagawall found and confirmed a high speed switching property in the order of a microsecond of the DOBAMBC thin film cell.

This ferroelectric chiral smectic liquid crystals have a high speed of response about 100 times that or the nematic ones conventional since then as well as good bistability so as to be applied to various display devices for moving pictures such as TV, high speed photoshutters and so on.

It is necessary as the ferroelectric liquid crystal, to have spontaneous polarization which is inversible by an electric field, chiral molecular structure, particular smectic layer and a dipole moment component in the vertical direction to the line of apsides of the liquid crystal molecule.

Followings have been known in relation thereto regarding how to make molecular designs in order to obtain liquid crystals having not only high dielectricity but also large spontaneous polarization;

(1) Since the rotation of liquid crystal molecule about the line of apsides may reduce efficient orientation degree of dipole moment so that spontaneous polarization is resultingly made smaller, it is effective to supress the molecule free rotation. For that purpose, it is possible to introduce a bulky atomic or molecular group in the vicinity of an asymetric carbon atom.

(2) It may be a direct method for obtaining large spontaneous polarization to cause large dipole moment in the vicinity of the asymetric carbon atom, for which an atomic or molecular group of fluorine such as $CF_3$ is directly introduced at the asymetric carbon atom.

SUMMARY OF THE INVENTION

The inventors have tried to make further improvements of liquid crystal compounds of the type referred to above based on the above known findings to succeed in manufacturing a series of new liquid crystal compounds having not only a larger and physicochemically stable spontaneous polarization but also a higher speed of response, by directly introducing an atomic or molecular group comprising fluorine of high electronegativity to the asymmetric carbon atom so as to enlarge the dipole moment of the liquid crystal molecule and simultaneously raising three-dimensional interaction between the asymmetric carbon atom and the polar group of a carbonyl bend adjacent to the asymmetrical carbon atom.

It has been found that the above new liquid crystal compounds may show tristability in molecular orientation fundamentally different from bistability in the conventional liquid crystal compounds of this sort so as to give optical response of tristable state to the applied electric field.

The series of new liquid crystal compounds according to the invention are represented by a formula;

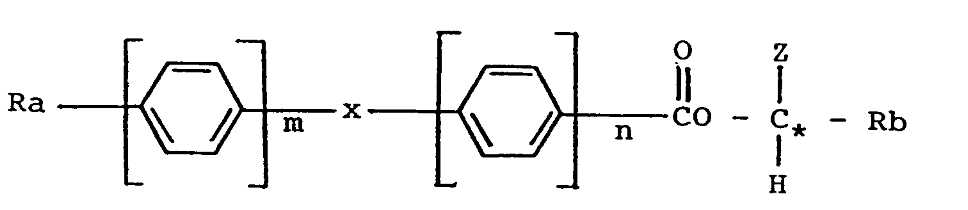

(I)

wherein Ra means an alkyl group of 1 - 20 carbon atoms or an alkoxy group of 1 - 20 carbon atoms with a proviso that Ra is the alkyl group when m = 1; Rb means an aliphatic alkyl group of 1 - 20 carbon atoms; X means

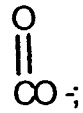

Z means a fluorinated alkyl group; m is 1 or 2; n is 2 or 1 and n + m = 3 ; * shows an optically active carbon and the liquid crystal compounds exhibit a tristable state in the S(3)* phase.

BRIEF DESCRIPTION OF THE DRAWINGS

In the accompanying drawings, figs. 1 - 10 respectively show infrared absorption spectra of the various liquid crystal compounds according to the invention.

Preferably, the liquid crystal compounds are represented by the formula (II)

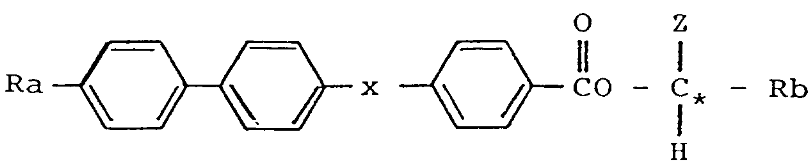

(II)

wherein Ra means an alkyl group of 3-16 carbon atoms or an alkoxy group of 3-16 carbon atoms; Rb means an aliphatic alkyl group of 3-16 carbon atoms.

Alternatively, they may be represented by the formula (III)

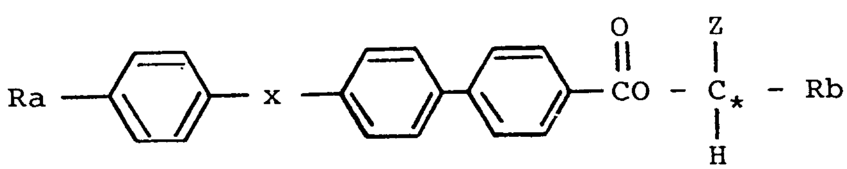

(III)

wherein Ra means an alkyl group of 3-16 carbon atoms; Rb means an aliphatic alkyl group of 3-16 carbon atoms.

Z in the formula refers to a fluoroalkyl or a halogenated fluoroalkyl group and preferably, the Z is a group selected from a group consisting of $CF_3$, $CHF_2$, $CH_2F$, $C_2F_5$, $CClF_2$, $CCl_2F$, $CF_3CCl_2$ and $C_3F_7$.

Preferably, the liquid crystal compounds of the invention are in accordance with any one of the following:-

4 - (1,1,1 - trifluoro - 2 - octyloxy - carbonyl) phenyl 4'-n-hexyloxybiphenyl-4-carboxylate and which exhibits tristable states in the S(3)* phase;

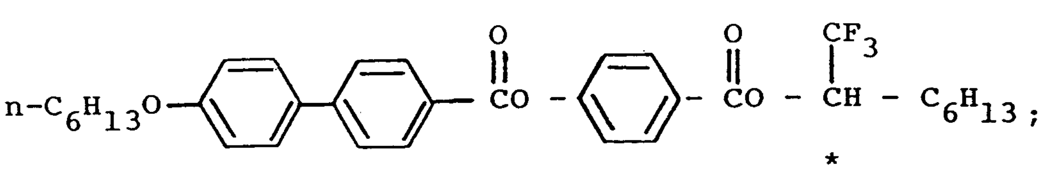

4 - (1,1,1 - trifluoro - 2 - octyloxy - carbonyl) phenyl 4'-n-octyloxybiphenyl-4-carboxylate and which exhibits tristable states in the S(3)* phase;

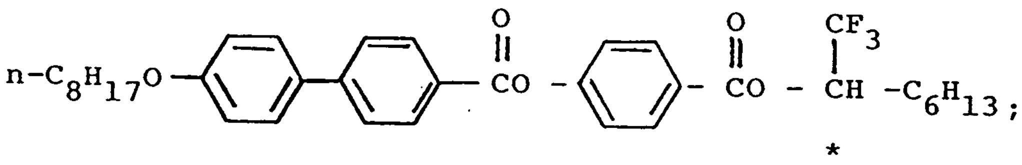

4 - (1,1,1 - trifluoro - 2 - octyloxy - carbonyl) phenyl 4'-n-nonyloxybiphenyl-4-carboxylate and which exhibits tristable states in the S(3)* phase;

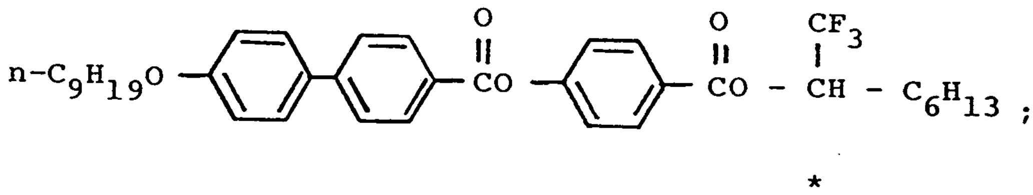

4 - (1,1,1 - trifluoro - 2 - octyloxy - carbonyl) phenyl 4'-n-decyloxybiphenyl-4-carboxylate and which exhibits tristable states in the S(3)* phase;

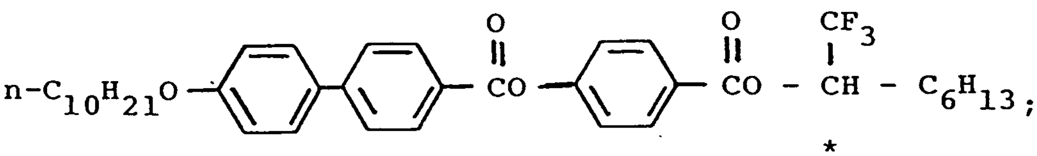

4 - (1,1,1 - trifluoro - 2 - octyloxycarbonyl) phenyl 4'-n-undecyloxybiphenyl-4-carboxylate and which exhibits tristable states in the S(3)* phase;

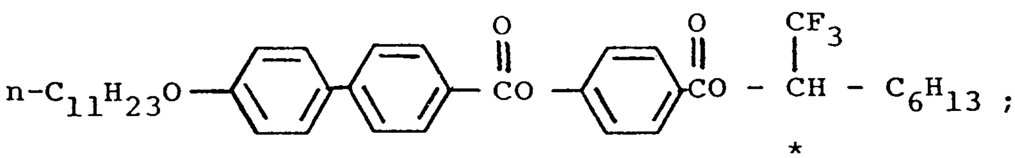

4 - (1,1,1 - trifluoro - 2 - octyloxy - carbonyl) phenyl 4'-n-dodecyloxybiphenyl-4-carboxylate and which exhibits tristable states in the S(3)* phase;

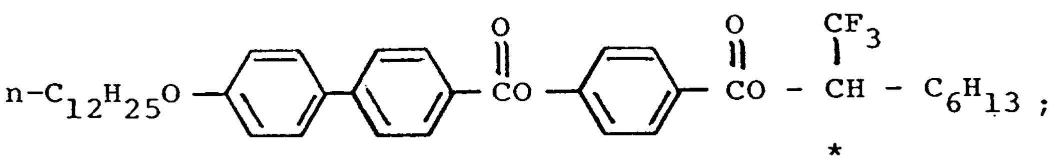

4- (1,1,1 -trifluoro - 2 - octyloxy - carbonyl) phenyl 4' -n - octylbiphenyl -4-carboxylate and which exhibits tristable states in the S(3)* phase;

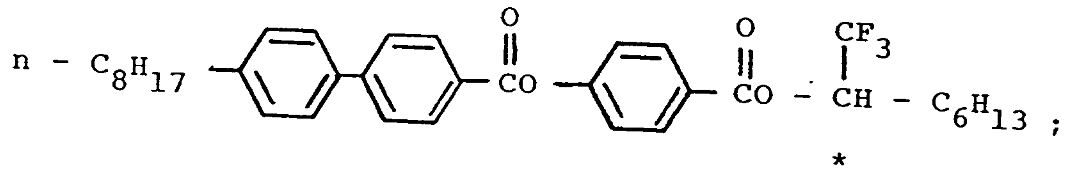

4 - (1,1,1 - trifluoro - 2 - decyloxy - carbonyl) phenyl 4' - n - octyloxybiphenyl - 4 - carboxylate and which exhibits tristable states in the S(3)* phase;

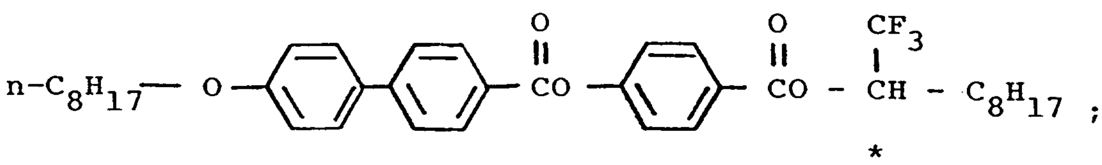

4 - (1,1,1,2,2 - pentafluoro - 3 - undecyloxycarbonyl) phenyl 4' - n - octyloxybiphenyl - 4 - carboxylate and which exhibits tristable states in the S(3)* phase;

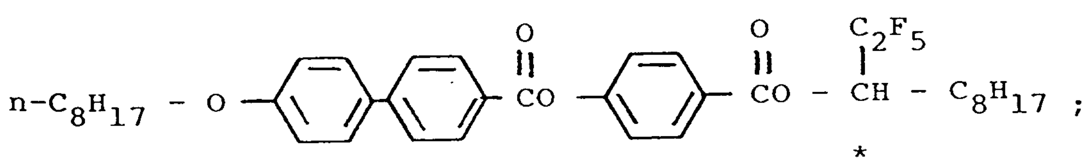

4 - (1,1,1 - trifluoro - 2 - octyloxy - carbonyl)-biphenyl 4 - n - octylbenzoate and which exhibits tristable states in the S(3)* phase.

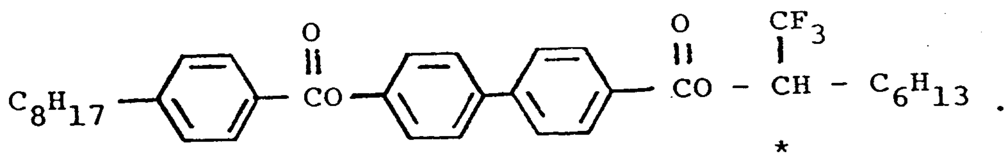

All of the afore mentioned formulas of the invention exhibiting tristable states in the S(3)* phase.

The liquid crystal compounds of the invention may be manufactured for instance as follows.

Firstly, 4-benzyloxybenzoic acid chloride is reacted with an 1,1,1-trifluoro-2-alkanol to obtain a 1,1,1-trifluoro-2-alkyl-4-benzyloxybenzoate, which is then hydrogenated to obtain 1,1,1-trifluoro-2-alkyl-4-hydroxybenzoate. The obtained hydroxy alkyl ester is reacted with a 4-n-alkyloxyphenyl (or biphenyl) carboxylic acid chloride to obtain an objective compound, 4-(1,1,1-trifluoro-2-alkoxycarbonyl)-phenyl-4'-n-alkoxybiphenyl-4-carboxlate.

It is also possible to react a 1,1,1-trifluoro-2-alkyl-4-hydroxybenzoate with a 4-n-alkyloxyphenyl (or biphenyl) carboxylic acid in a solvent such as diethyl ether and tetrahydrofuran, in the presence of a catalyst such as N,N-dimethylaniline, 4-pyrroli-dinopyridine etc. and a condensing agent such as dicyclohexycarbodiimide, N,N-carbonyl diimidazole etc.

The objective compounds of the invention may be obtained further by a following process. Terephthalic acid chloride is reacted with an 1,1,1-trifluoro-2-alkanol to obtain an 4-(1,1,1-trifluoro-2-alkyloxy-carbonyl) benzoic acid chloride, which

is then reacted with a 4-alkyloxy-4'-hydroxybiphenyl to obtain an objective compound, 4-n-alkoxy-4'-biphenyl-4-(1,1,1-trifluoro-2-alkoxycarbonyl)-4-benzoate.

The liquid crystal compounds of the invention are explained in more detail with reference to the following examples.

Example 1

1. Synthesis of 1,1,1-trifluoro-2-octyl-4-benzyloxy-benzoate.

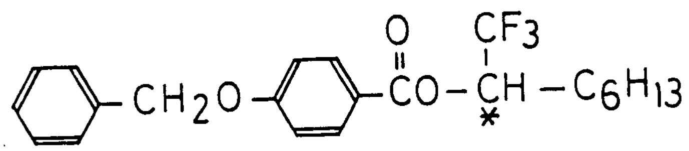

4.3 g of 4-Benzyloxybenzoic acid chloride was dissolved in 50 ml of methylene chloride to prepare a solution to which a solution of 2.9 g of (+)- 1,1,1-trifluoro-2-octanol, 0.6 g of dimethylaminopyridine and 1.7 g of triethylamine in 50 ml of methylene chloride was droppingly and gradually added under ice cooling. The mixture at the room temperature was reacted for 24 hours and then taken in ice water to be extracted with methylene chloride. The methylene chloride phase was successively washed with diluted hydrochloric acid, water, 1N aqueous sodium carbonate solution and water in this order, dried above magnsium sulfate and distilled for removing the solvent to obtain the crude objective compound, which was purified by toluene/silica gel chromatography and recrystallization with ethanol to obtain the objective crystal liquid compound in the amount of 3.8 g.

2) Synthesis of 1,1,1-trifluoro-2-octyl-4-hydroxybenzoate

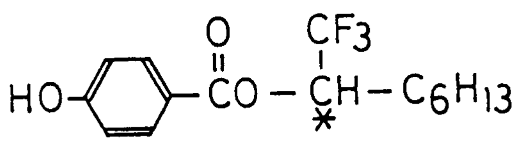

The compound obtained in the above was dissolved in 100 ml of methanol to which 0.4 g carbon carried with 10 % Pd was added, and the mixture was subjected to hydrogenation in an atmosphere of hydrogen to obtain the objective compound in the amount of 2.8 g.

3) Synthesis of 4-(1,1,1-trifluoro-2-octyloxycarbonyl)-phenyl-4'-n-hexyloxybiphenyl-4-carboxylate

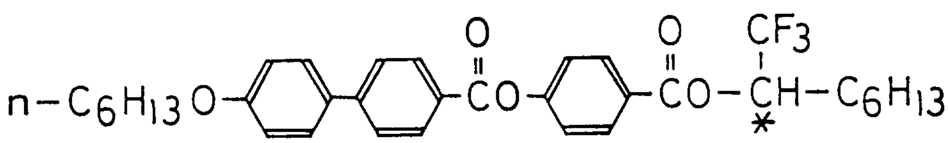

After heating 3.0 g of 4-n-hexyloxydiphenyl carboxylic acid and an excessive amount of thionyl chloride under reflux for 6 hours, unreacted thionyl chloride was distilled off to obtain 4-n-hexyloxydiphenyl carboxylic acid chloride.

The acid chloride was taken in 50 ml of methylene chloride to prepare a solution, to which a solution of 2.8 g of 1,1,1-trifluoro-2-octyl-4-hydroxybenzoate obtained in the above, 1.0 g of triethylamine and 0.3 g of dimethylaminopyridine in 50 ml of methylene chloride was droppingly and gradually added under ice cooling to be reacted at the room temperature for 24 hours. The reaction product was taken in ice water and extracted with methylene chloride. The methylene chloride phase was successively washed with diluted hydrochloric acid, water, 1N aqueous solution of sodium carbonate and water in this order, dried above sodium sulfate and subjected to distillation for removing the solvent to obtain the crude objective product, which was purified by toluene/silica gel chromatography to obtain the objective product in the

amount of 2.1 g, which was further purified by recrystallization with absolute ethanol to be subjected to measurement of phase transition points etc. of which result is shown later.

Examples 2 - 6

Instead of 4-n-hexyloxybiphenyl carboxylic acid used in Example 1-(3),

2. 4-n-octyloxybiphenyl carboxylic acid,
3. 4-n-nonyloxybiphenyl carboxylic acid,
4. 4-n-decyloxybiphenyl carboxylic acid,
5. 4-n-undecyloxybiphenyl carboxylic acid,
6. 4-n-dodecyloxybiphenyl carboxylic acid were respectively used to proceed with treatments just same as in Example 1 to obtain following objective compounds.

2. 4-(1,1,1-trifluoro-2-octyloxycarbonyl)-phenyl-4'-n-octyloxybiphenyl-4-carboxylate

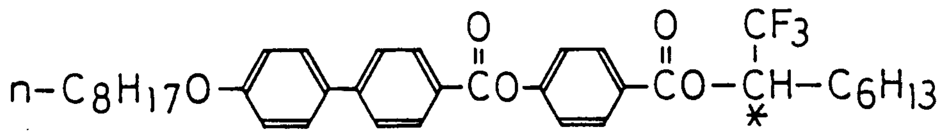

3. 4-(1,1,1-trifluoro-2-octyloxycarbonyl)-phenyl-4'-n-nonyloxybiphenyl-4-carboxylate

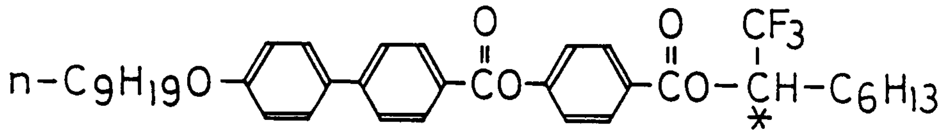

4. 4-(1,1,1-trifluoro-2-octyloxycarbonyl)-phenyl-4'-n-decyloxybiphenyl-4-carboxylate

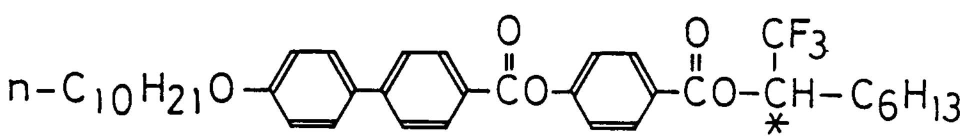

5. 4-(1,1,1-trifluoro-2-octyloxycarbonyl)-phenyl-4'-n-undecyloxybiphenyl-4-carboxylate

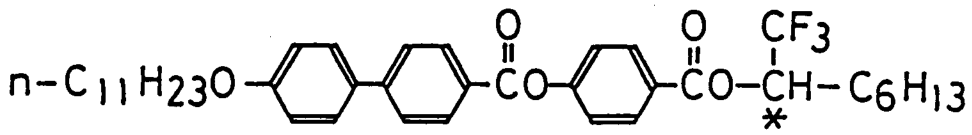

6. 4-(1,1,1-trifluoro-2-octyloxycarbonyl)-phenyl-4'-n-dodecyloxybiphenyl-4-carboxylate

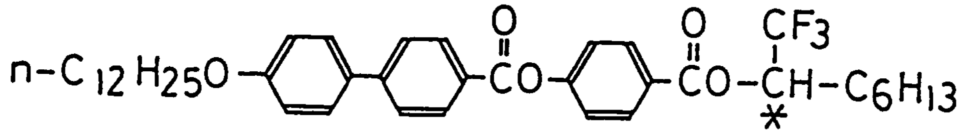

The liquid crystal compounds referred to above, which may be represented by the following formula, have tristable phase transition points (°C) as follows Furthermore, S(3)* represents chiral smetic phase showing the tristable state.

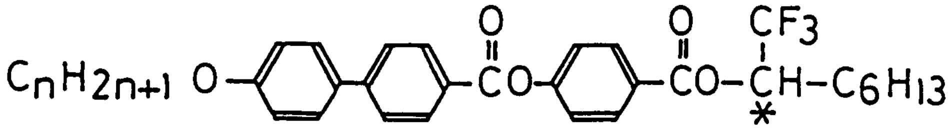

n=6 Cry $\underset{104.7}{\overset{100}{\rightleftharpoons}}$ S(3)* $\underset{126.0}{\text{———}}$ $S_C^*(2)$ $\underset{126.5}{\overset{128}{\rightleftharpoons}}$ $S_A$ $\underset{144}{\overset{142.2}{\rightleftharpoons}}$ Iso

n=8 Cry $\underset{74}{\overset{80}{\rightleftharpoons}}$ S(3)* $\underset{114}{\text{———}}$ $S_C^*(2)$ $\underset{115}{\text{———}}$ $S_A$ $\underset{123.4}{\overset{123.3}{\rightleftharpoons}}$ Iso

n=9 Cry $\underset{40.4}{\overset{67.2}{\rightleftharpoons}}$ S(3)* $\underset{106.2}{\overset{107}{\rightleftharpoons}}$ $S_C^*(2)$ $\underset{110.3}{\overset{111}{\rightleftharpoons}}$ $S_A$ $\underset{114.9}{\overset{115.6}{\rightleftharpoons}}$ Iso

n=10 Cry $\underset{25.5}{\overset{30}{\rightleftharpoons}}$ S(3)* $\underset{102.7}{\text{———}}$ $S_C^*(2)$ $\underset{103}{\overset{104.6}{\rightleftharpoons}}$ $S_A$ $\underset{107.5}{\overset{109.2}{\rightleftharpoons}}$ Iso

n=11 Cry $\underset{14}{\overset{39}{\rightleftharpoons}}$ S(3)* $\underset{100}{\overset{101}{\rightleftharpoons}}$ $S_A$ $\underset{104.3}{\overset{104.2}{\rightleftharpoons}}$ Iso

n=12 Cry $\underset{26.5}{\overset{61.2}{\rightleftharpoons}}$ S(3)* $\underset{97.0}{\overset{98.4}{\rightleftharpoons}}$ $S_A$ $\underset{100.4}{\overset{101.2}{\rightleftharpoons}}$ Iso

The nuclear magnetic resonace spectra or the above liquid crystal compounds according to the invention are as shown in Tables 1 - 5 at the end of the specification and before the Claims.

The infrared absorption spectra (KBr) of the above liquid crystal compounds of the invention are shown in Fig. 1 (n=6), Fig. 2 (n=8), Fig. 3 (n=9), Fig. 4 (n=10), Fig. 5 (n=11) and Fig. 6 (n=12).

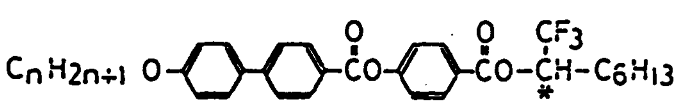

Example 7

Synthesis of 4-(1,1,1-trifluoro-2-octyloxycarbonyl)-phenyl-4'-n-octylbiphenyl-4-carboxylate

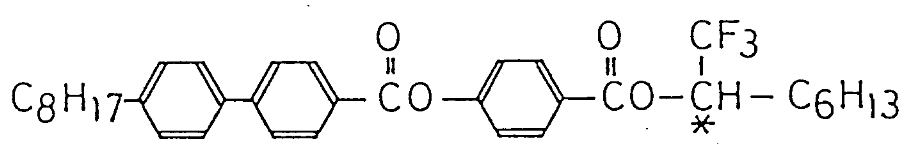

Instead of 4-n-hexyloxybiphenyl-4'-carboxylic acid used in Example 1-(3), 4-n-octylbiphenyl-4'-carboxylic acid was used here and the other treatments were carried out just same as in Example 1 to obtain the objective liquid crystal compound as above.

The above compound showed tristable phase transition points as follows.

$$\mathrm{Cry} \underset{24.5}{\overset{46.0}{\rightleftharpoons}} \mathrm{S(3)}^{*} \underset{74.0}{\overset{74.0}{\rightleftharpoons}} S_C^{*} \underset{75.4}{\overset{76.8}{\rightleftharpoons}} S_A \underset{79.2}{\overset{79.1}{\rightleftharpoons}} \mathrm{Iso}$$

A nuclear magnetic resonace spectrum thereof is shown in Table 6.

Example 8

Synthesis of 4-(1,1,1-trifluoro-2-docyloxycarbonyl)-phenyl-4'-n-octyloxybiphenyl-4-carboxylate

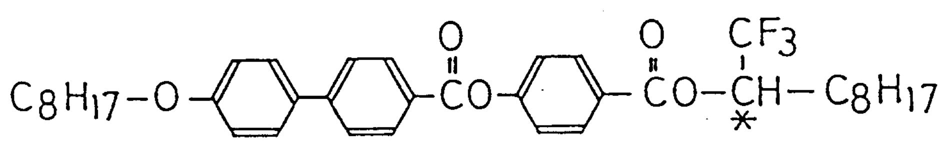

Instead of (+)-1,1,1-trifluoro-2-octanol used in Example 1-(1),(+)-1,1,1-trifluoro-2-decanol was used here and the other treatments were carried out just same as in Example 1 to obtain the objective compound as above.

This compound of the invention also showed tristable phase transition points as follows.

$$\mathrm{Cry} \xleftarrow[57.0]{} \mathrm{S(3)}^{*} \xleftarrow[103.0]{} S_C^{*} \xleftarrow[103.5]{} S_A \xleftarrow[114.0]{} \mathrm{Iso}$$

An infrared absorption spectrum thereof is shown in Fig.8.

Example 9

Synthesis of 4-(1,1,1,2,2-pentafluoro-3-undecyloxycarbonyl)-phenyl-4'-n-octyloxybiphenyl-4-carboxylate

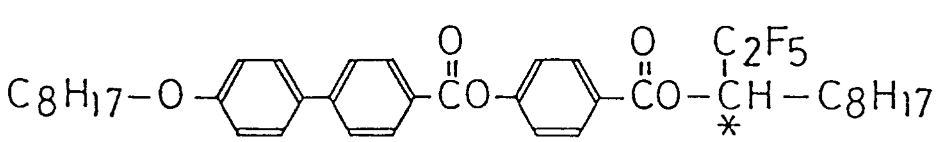

In stead of 1,1,1-trifluoro-2-octanol used in Example 1-(1), (-)-1,1,1,2,2-pentafluoro-3-undecanol was used and the other treatments were carried out just same as in Example 1 to obtain the above objective compound.

This compound has following tristable phase transition points

$$Cry \xleftarrow[38.8]{} S(3^*) \xleftarrow[70.0]{} S_C^* \xleftarrow[76.8]{} S_A \xleftarrow[85.5]{} Iso$$

An infrared absorption spectrum thereof is shown in Fig.9.

Example 10

Synthesis of 4-(1,1,1-trifluoro-2-octyloxycarbonyl)-biphenyl-4-n-octylbenzoate

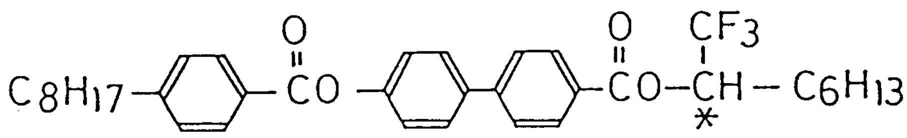

In the presence of 0.3 g of dicyclocarbodiimide, a few pieces of dimethylaminopyridine and 30 ml of tetrahydrofuran, 0.5 g of 4-(1,1,1-trifluoro-2-octyloxycarbonyl) phenylphenol was reacted with 0.31 g of octylbenzoate to obtain the crude objective compound, which was purified by toluene/silica gel chromatography with hexane/ethyl acetate (10/0.5) and recrystallization with ethanol to obtain the objective compound in the amount of 0.1 g.

The liquid crystal has following tristable phase transition points.

$$Cry \xleftarrow[-20]{} S(3^*) \xleftarrow[38]{} S_C^* \xleftarrow[40]{} S_A \xleftarrow[61.9]{} Iso$$

A nuclear magnetic resonance spectrum and an infrared absorption spectrum thereof are respectively shown in Table 8 and Fig.10.

TABLE 1

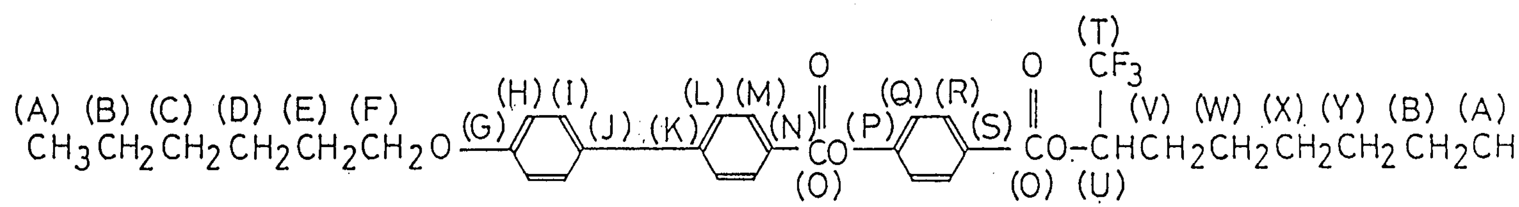

| Carbon | ppm | Remarks | Carbon | ppm | Remarks |
|---|---|---|---|---|---|
| A | 14.0 | Methyl Carbon | O | 164.3 | Carbonyl Carbon |
| B | 22.5 | Methylene Carbon | P | 155.4 | Aromatic Ring Carbon Adjacent O |
| C | 31.6 | " | Q | 122.0 | Aromatic Ring Carbon Adjacent O |
| D | 25.8 | " | R | 131.6 | " |
| E | 29.3 | " | S | 126.4 | Aromatic Ring Carbon Adjacent to Carbonyl |
| F | 68.2 | Methylene Carbon Adjacent to O | T | 124.1 | F3 Substituted Methyl Carbon |
| G | 159.7 | Aromatic Ring Carbon Adjacent to O | U | 70.3 | Methine Carbon Adjacent to F3 Sbustituted Methyl |
| H | 115.0 | Aromatic Ring Carbon | V | 28.2 | Methylene Carbon |
| I | 128.4 | " | W | 24.6 | " |
| J | 131.8 | " | X | 28.8 | " |
| K | 146.4 | " | Y | 31.4 | " |
| L | 126.6 | " | | | |
| M | 130.7 | " | | | |
| N | 126.9 | Aromatic Ring Carbon Adjacent To Carbonyl | | | |

TABLE 2

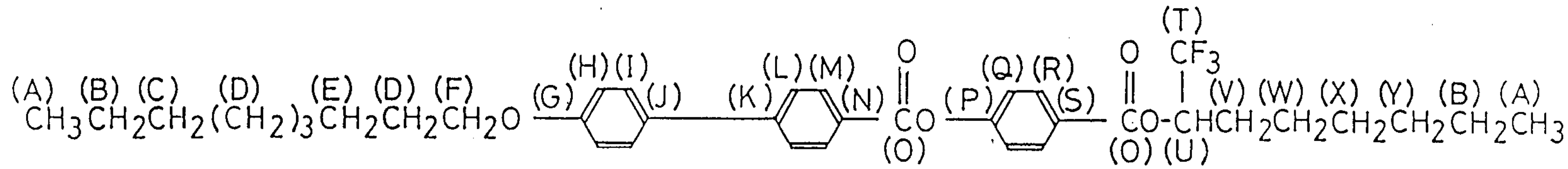

| Carbon | ppm | Remarks | Carbon | ppm | Remarks |
|---|---|---|---|---|---|
| A | 14.0 | Methyl Carbon | O | 164.3 | Carbonyl Carbon |
| B | 22.6 | Methylene Carbon | P | 155.4 | Aromatic Ring Carbon Adjacent O |
| C | 31.9 | " | Q | 122.0 | Aromatic Ring Carbon Adjacent O |
| D | 29.5 | " | R | 131.6 | " |
| E | 26.1 | " | S | 126.4 | Aromatic Ring Carbon Adjacent to Carbonyl |
| F | 68.2 | Methylene Carbon Adjacent to O | T | 124.1 | F3 Substituted Methyl Carbon |
| G | 159.7 | Aromatic Ring Carbon Adjacent to O | U | 70.3 | Methine Carbon Adjacent to F3 Sbustituted Methyl |
| H | 115.1 | Aromatic Ring Carbon | V | 28.1 | Methylene Carbon |
| I | 128.4 | " | W | 24.6 | " |
| J | 131.8 | " | X | 28.8 | " |
| K | 146.4 | " | Y | 31.5 | " |
| L | 126.6 | " | | | |
| M | 130.7 | " | | | |
| N | 126.9 | Aromatic Ring Carbon Adjacent To Carbonyl | | | |

TABLE 3

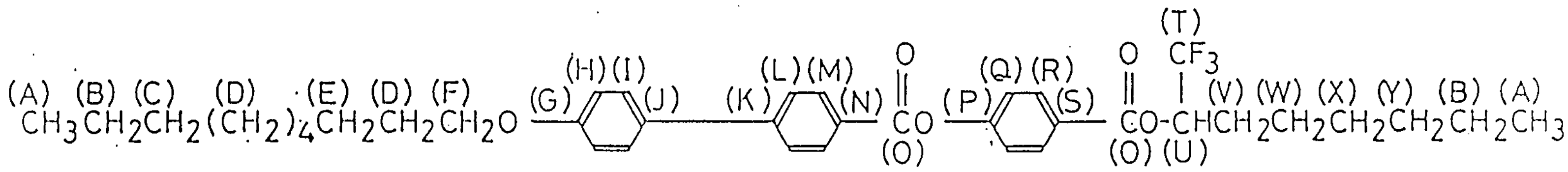

| Carbon | ppm | Remarks | Carbon | ppm | Remarks |
|---|---|---|---|---|---|
| A | 14.0 | Methyl Carbon | O | 164.2 | Carbonyl Carbon |
| B | 22.6 | Methylene Carbon | P | 155.4 | Aromatic Ring Carbon Adjacent O |
| C | 32.0 | " | Q | 122.0 | Aromatic Ring Carbon Adjacent O |
| D | 29.5 | " | R | 131.6 | " |
| E | 26.2 | " | S | 126.4 | Aromatic Ring Carbon Adjacent to Carbonyl |
| F | 68.2 | Methylene Carbon Adjacent to O | T | 124.1 | F3 Substituted Methyl Carbon |
| G | 159.7 | Aromatic Ring Carbon Adjacent to O | U | 70.4 | Methine Carbon Adjacent to F3 Sbustituted Methyl |
| H | 115.1 | Aromatic Ring Carbon | V | 28.1 | Methylene Carbon |
| I | 128.3 | " | W | 24.6 | " |
| J | 131.8 | " | X | 28.8 | " |
| K | 146.4 | " | Y | 31.5 | " |
| L | 126.6 | " | | | |
| M | 130.7 | " | | | |
| N | 126.9 | Aromatic Ring Carbon Adjacent To Carbonyl | | | |

TABLE 4

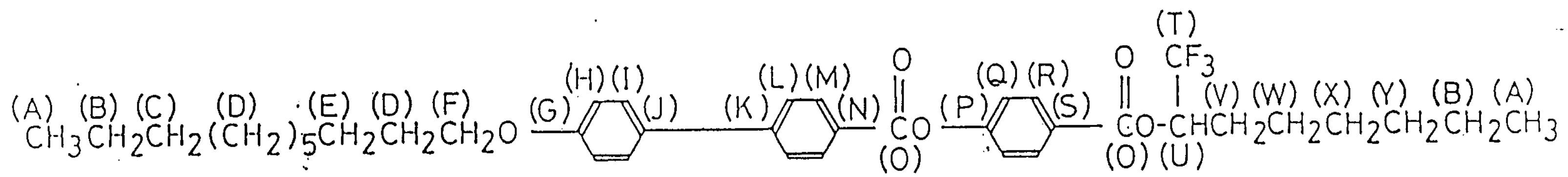

| Carbon | ppm | Remarks | Carbon | ppm | Remarks |
|---|---|---|---|---|---|
| A | 14.0 | Methyl Carbon | O | 164.3 | Carbonyl Carbon |
| B | 22.6 | Methylene Carbon | P | 155.4 | Aromatic Ring Carbon Adjacent O |
| C | 32.0 | " | Q | 122.0 | Aromatic Ring Carbon Adjacent O |
| D | 29.5 | " | R | 131.6 | " |
| E | 26.1 | " | S | 126.4 | Aromatic Ring Carbon Adjacent to Carbonyl |
| F | 68.2 | Methylene Carbon Adjacent to O | T | 124.0 | F3 Substituted Methyl Carbon |
| G | 159.7 | Aromatic Ring Carbon Adjacent to O | U | 70.4 | Methine Carbon Adjacent to F3 Sbustituted Methyl |
| H | 115.1 | Aromatic Ring Carbon | V | 28.2 | Methylene Carbon |
| I | 128.3 | " | W | 24.6 | " |
| J | 131.7 | " | X | 28.8 | " |
| K | 146.3 | " | Y | 31.5 | " |
| L | 126.6 | " | | | |
| M | 130.8 | " | | | |
| N | 126.9 | Aromatic Ring Carbon Adjacent To Carbonyl | | | |

TABLE 5

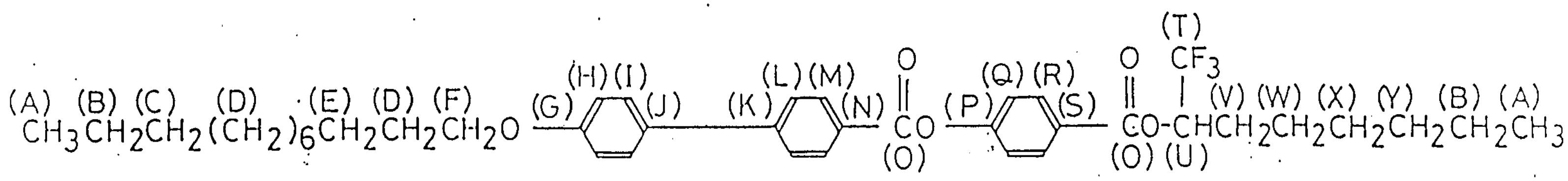

| Carbon | ppm | Remarks | Carbon | ppm | Remarks |
|---|---|---|---|---|---|
| A | 14.0 | Methyl Carbon | O | 164.3 | Carbonyl Carbon |
| B | 22.6 | Methylene Carbon | P | 155.3 | Aromatic Ring Carbon Adjacent 0 |
| C | 31.9 | " | Q | 122.0 | Aromatic Ring Carbon Adjacent U |
| D | 29.5 | " | R | 131.6 | " |
| E | 26.1 | " | S | 126.3 | Aromatic Ring Carbon Adjacent to Carbonyl |
| F | 68.2 | Methylene Carbon Adjacent to 0 | T | 124.0 | F3 Substituted Methyl Carbon |
| G | 159.7 | Aromatic Ring Carbon Adjacent to 0 | U | 70.3 | Methine Carbon Adjacent to F3 Sbustituted Methyl |
| H | 115.0 | Aromatic Ring Carbon | V | 28.1 | Methylene Carbon |
| I | 128.3 | " | W | 24.5 | " |
| J | 131.8 | " | X | 28.8 | " |
| K | 146.4 | " | Y | 31.4 | " |
| L | 126.6 | " | | | |
| M | 130.7 | " | | | |
| N | 126.7 | Aromatic Ring Carbon Adjacent To Carbonyl | | | |

TABLE 6

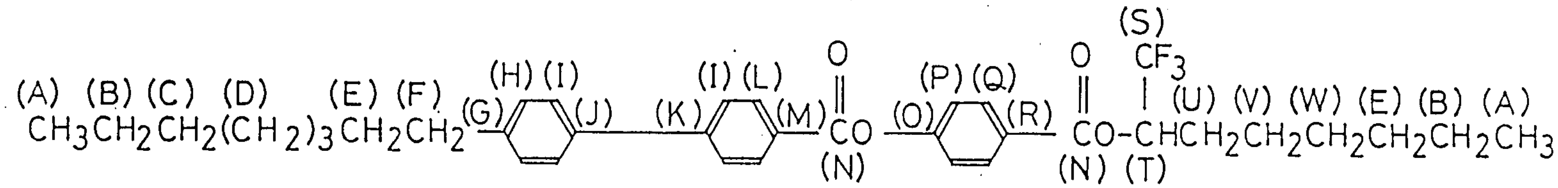

| Carbon | ppm | Remarks | Carbon | ppm | Remarks |
|---|---|---|---|---|---|
| A | 14.0 | Methyl Carbon | O | 155.4 | Aromatic Ring Carbon Adjacent O |
| B | 22.6 | Methylene Carbon | P | 122.0 | Aromatic Ring Carbon |
| C | 31.9 | " | Q | 131.6 | " |
| D | 29.5 | " | R | 126.4 | Aromatic Ring Carbon Adjacent to Carbonyl |
| E | 31.5 | " | S | 124.0 | F3 Substituted Methyl Carbon |
| F | 35.7 | Methylene Carbon Adjacent to Aromatic Ring | T | 70.3 | Methine Carbon Adjacent to F3 Substituted Methyl |
| G | 143.5 | Aromatic Ring Carbon Adjacent Adjacent to Methylene | U | 28.1 | Methylene Carbon |
| H | 129.0 | Aromatic Ring Carbon | V | 28.1 | " |
| I | 127.1 | " | W | 28.8 | " |
| J | 137.0 | " | | | |
| K | 146.7 | " | | | |
| L | 130.0 | " | | | |
| M | 127.4 | Aromatic Ring Carbon Adjacent to Carbonyl | | | |
| N | 164.3 | Carbonyl Carbon | | | |

TABLE 7

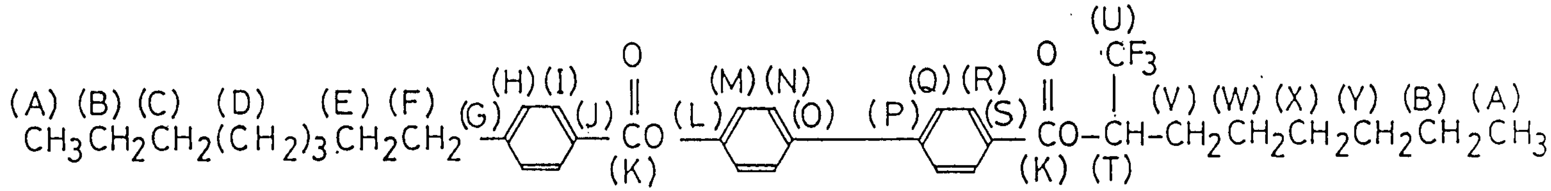

| Carbon | ppm | Remarks | Carbon | ppm | Remarks |
|---|---|---|---|---|---|
| A | 14.0 | Methyl Carbon | O | 155.4 | Aromatic Ring Carbon |
| B | 22.6 | Methylene Carbon | P | 145.6 | " |
| C | 31.9 | " | Q | 127.1 | " |
| D | 29.4 | " | R | 130.5 | " |
| E | 31.2 | " | S | 1227.6 | " |
| F | 36.1 | Methylene Carbon Adjacent to Aromatic Ring | T | 70.3 | Methine Carbon Adjacent to F3 Substituted Methyl |
| G | 149.5 | Aromatic Ring Carbon Adjacent Adjacent to Methylene | U | 28.1 | F3 Substituted Methyl Carbon |
| H | 129.0 | Aromatic Ring Carbon | V | 28.1 | Methylene Carbon |
| I | 130.2 | " | W | 24.6 | " |
| J | 126.8 | " | | | |
| K | 146.7 | " | Y | 31.4 | " |
| L | 151.3 | Aromatic Ring Carbon Adjacent O | | | |
| M | 122.3 | Aromatic Ring Carbon | | | |
| N | 128.3 | " | | | |

## Claims

1. Liquid crystal compounds represented by the formula;

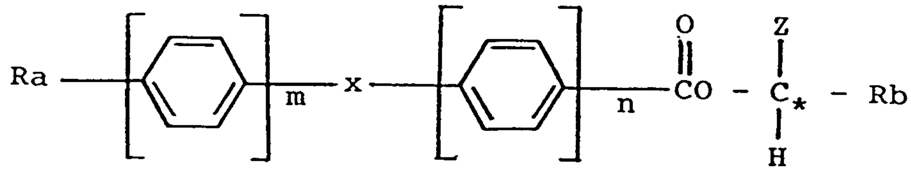

(I)

wherein Ra means an alkyl group of 1 - 20 carbon atoms or an alkoxy group of 1 - 20 carbon atoms with a proviso that Ra is the alkyl group when m = 1; Rb means an aliphatic alkyl group of 1 - 20 carbon atoms; X means

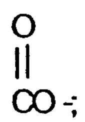

Z means a fluorinated alkyl group; m is 1 or 2; n is 2 or 1 and n + m = 3 ; * shows an optically active carbon and the liquid crystal compounds exhibit a tristable state in the S(3)* phase.

2. Liquid crystal compounds according to claim 1, which is represented by the formula (II)

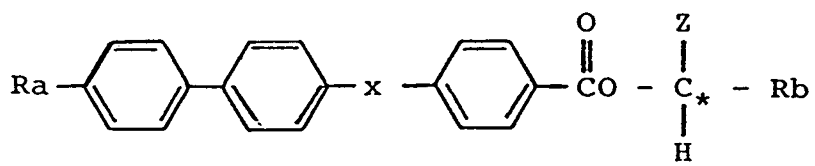

(II)

wherein Ra means an alkyl group of 3 - 16 carbon atoms or an alkoxy group of 3 - 16 carbon atoms; Rb means an aliphatic alkyl group of 3 - 16 carbon atoms.

3. Liquid crystal compounds according to claim 1, which is represented by the formula (III)

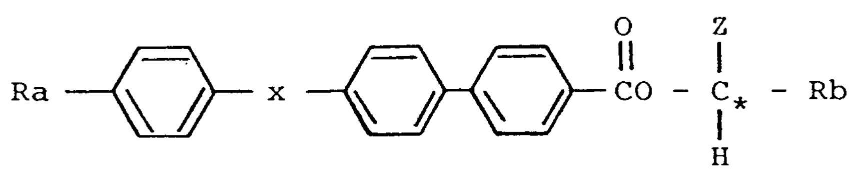

(III)

wherein Ra means an alkyl group of 3 - 16 carbon atoms; Rb means an aliphatic alkyl group of 3 - 16 carbon atoms.

4. Liquid crystal compounds according to any one of claims 1 to 3, wherein Z is a group selected from a group consisting of $CF_3$, $CHF_2$, $CH_2F$, $C_2F_5$, $CClF_2$, $CCl_2F$, $CF_3CCl_2$ and $C_3F_7$.

**5.** A liquid crystal compound of the following formula, which is 4 - (1,1,1 - trifluoro - 2 - octyloxy - carbonyl) phenyl 4' - n-hexyloxybiphenyl-4-carboxylate and which exhibits tristable states in the S(3)* phase.

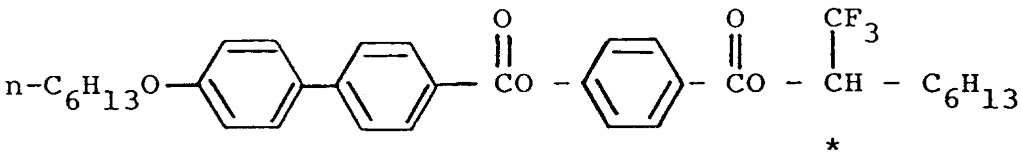

**6.** A liquid crystal compound of the following formula, which is 4 - (1,1,1 - trifluoro - 2 - octyloxy - carbonyl) phenyl 4' - n-octyloxybiphenyl-4-carboxylate and which exhibits tristable states in the S(3)* phase.

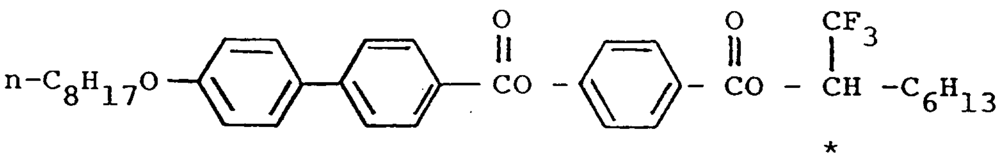

**7.** A liquid crystal compound of the following formula, which is 4 - (1,1,1 - trifluoro - 2 - octyloxy - carbonyl) phenyl 4' - n-nonyloxybiphenyl-4-carboxylate and which exhibits tristable states in the S(3)*.

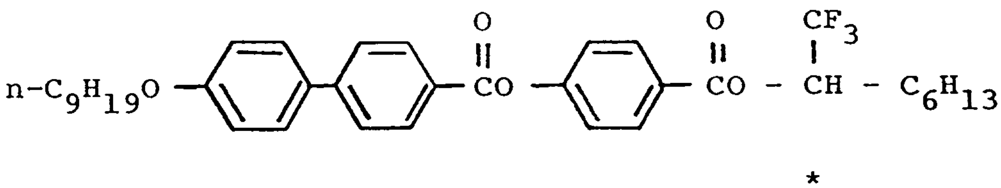

**8.** A liquid crystal compound of the following formula, which is 4 - (1,1,1 - trifluoro - 2 - octyloxy - carbonyl) phenyl 4' - n-decyloxybiphenyl-4-carboxylate and which exhibits tristable states in the S(3)*.

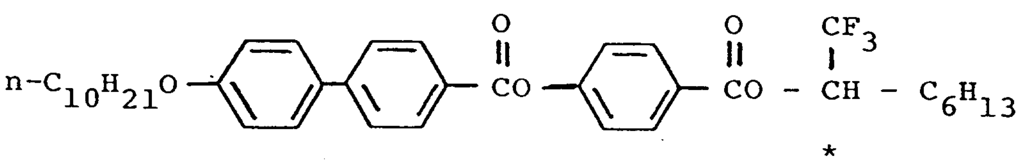

**9.** A liquid crystal compound of the following formula, which is 4 - (1,1,1 - trifluoro - 2 - octyloxycarbonyl) phenyl 4' -n-undecyloxybiphenyl-4-carboxylate and which exhibits tristable states in the S(3)* phase.

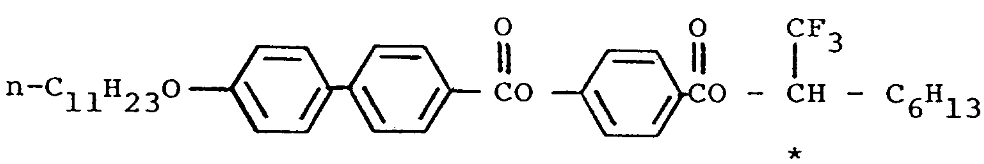

10. A liquid crystal compound of the following formula, which is 4 - (1,1,1 - trifluoro - 2 - octyloxy - carbonyl) phenyl 4' - n-dodecyloxybiphenyl-4-carboxylate and which exhibits tristable states in the S(3)* phase.

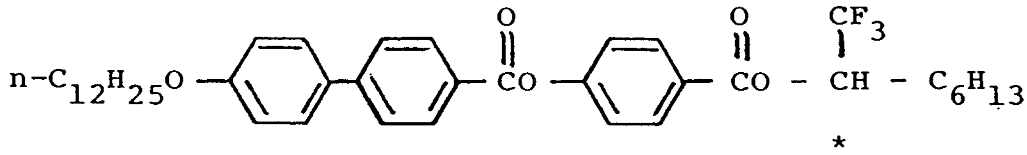

11. A liquid crystal compound of the following formula, which is 4 - (1,1,1 - trifluoro - 2 - octyloxy - carbonyl) phenyl 4' - n - octylbiphenyl - 4 - carboxylate and which exhibits tristable states in the S(3)* phase.

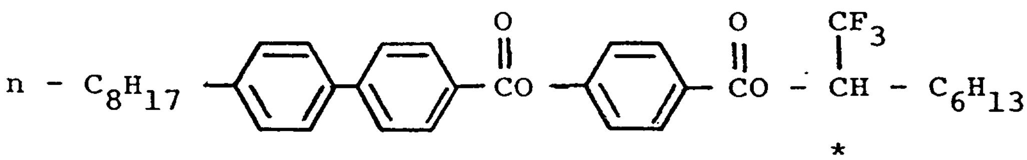

12. A liquid crystal compound of the following formula, which is 4 - (1,1,1 - trifluoro - 2 - decyloxy - carbonyl) phenyl 4' - n - octyloxybiphenyl - 4 - carboxylate and which exhibits tristable states in the S(3)* phase.

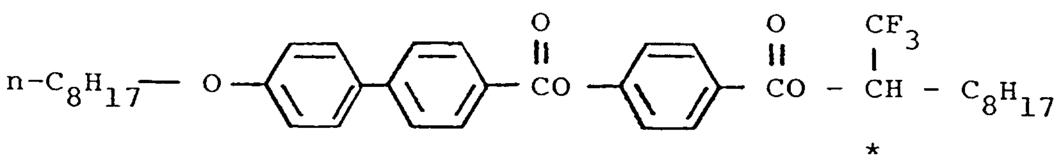

13. A liquid crystal compound of the following formula, which is 4 - (1,1,1,2,2 - pentafluoro - 3 - undecyloxycarbonyl) phenyl 4' - n - octyloxybiphenyl - 4 - carboxylate and which exhibits tristable states in the S(3)* phase.

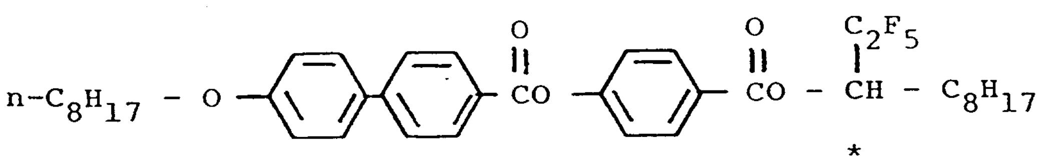

14. A liquid crystal compound of the formula given in claim 1, which are 4 - (1,1,1 - trifluoro - 2 - octyloxy - carbonyl)-biphenyl 4 - n - octylbenzoate and which exhibits tristable states in the S(3)* phase.

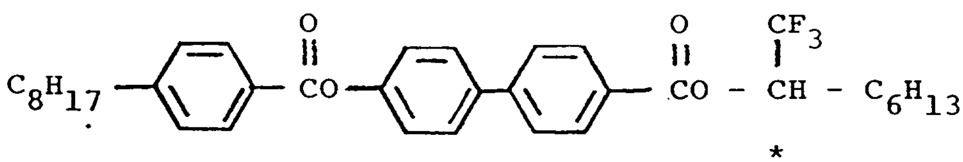

**Patentansprüche**

1. Flüssigkristall-Verbindungen, wiedergegeben durch die Formel

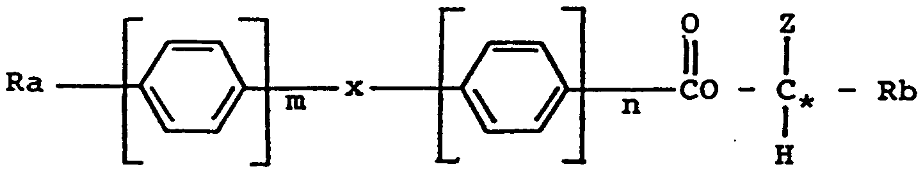

(I)

worin Ra für eine Alkylgruppe mit 1 bis 20 Kohlenstoffatomen oder eine Alkoxygruppe mit 1 bis 20 Kohlenstoffatomen steht, mit der Maßgabe, daß Ra eine Alkylgruppe ist, wenn m = 1 ist; Rb für eine aliphatische Alkylgruppe mit 1 bis 20 Kohlenstoffatomen steht; X für -O-C=O steht; Z für eine fluorierte Alkylgruppe steht; m für 1 oder 2 steht; n für 2 oder 1 steht und (m + n) = 3 ist; "*" ein optisch aktives Kohlenstoffatom anzeigt und die Flüssigkristall-Verbindungen einen tristabilen Zustand in der S(3)*-Phase zeigen.

2. Flüssigkristall-Verbindungen nach Anspruch 1, welche wiedergegeben sind durch die Formel (II)

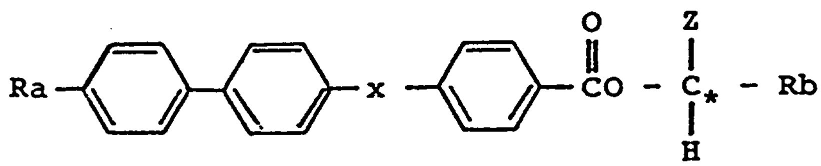

(II)

worin Ra für eine Alkylgruppe mit 3 bis 16 Kohlenstoffatomen oder eine Alkoxygruppe mit 3 bis 16 Kohlenstoffatomen steht und Rb für eine aliphatische Alkylgruppe mit 3 bis 16 Kohlenstoffatomen steht.

3. Flüssigkristall-Verbindungen nach Anspruch 1, welche wiedergegeben sind durch die Formel (III)

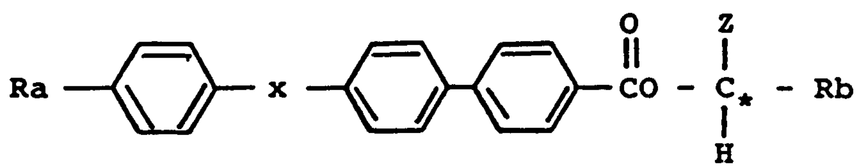

(III)

worin Ra für eine Alkylgruppe mit 3 bis 16 Kohlenstoffatomen steht und Rb für eine aliphatische Alkylgruppe mit 3 bis 16 Kohlenstoffatomen steht.

4. Flüssigkristall-Verbindungen nach einem der Ansprüche 1 bis 3, worin Z für eine Gruppe steht, die gewählt ist aus der aus $CF_3$, $CHF_2$, $CH_2F$, $C_5F_5$, $CClF_2$, $CCl_2F$, $CF_3CCl_2$ und $C_3F_7$ bestehenden Gruppe.

5. Flüssigkristallverbindung der nachfolgenden Formel, nämlich 4-(1,1,1-Trifluor-2-octyloxycarbonyl-)phenyl-4'-n-hexyloxybiphenyl-4-carboxylat, welche tristabile Zustände in der S(3)*-Phase zeigt.

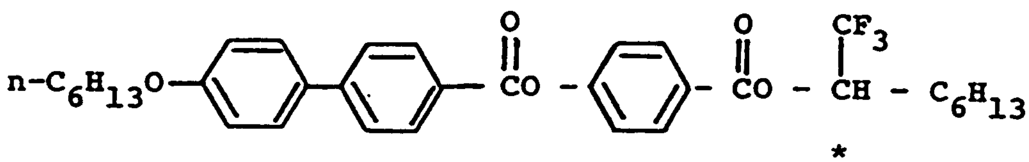

6. Flüssigkristallverbindung der nachfolgenden Formel, nämlich 4-(1,1,1-Trifluor-2-octyloxycarbonyl-)phenyl-4'-n-octyloxybiphenyl-4-carboxylat, welche tristabile Zustände in der S(3)*-Phase zeigt.

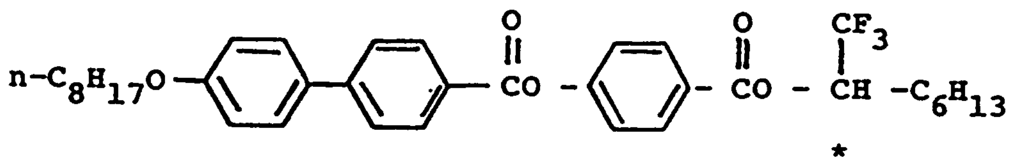

7. Flüssigkristallverbindung der nachfolgenden Formel, nämlich 4-(1,1,1-Trifluor-2-octyloxycarbonyl-)phenyl-4'-n-nonyloxybiphenyl-4-carboxylat, welche tristabile Zustände in der S(3)*-Phase zeigt.

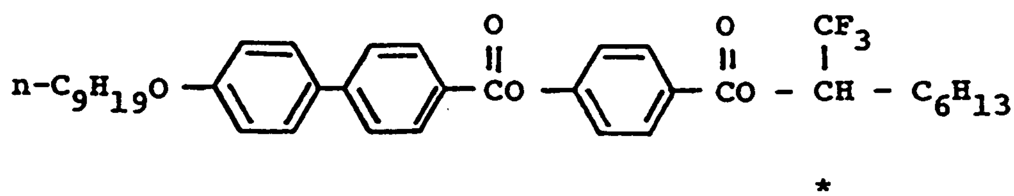

8. Flüssigkristallverbindung der nachfolgenden Formel, nämlich 4-(1,1,1-Trifluor-2-octyloxycarbonyl-)phenyl-4'-n-decyloxybiphenyl-4-carboxylat, welche tristabile Zustände in der S(3)*-Phase zeigt.

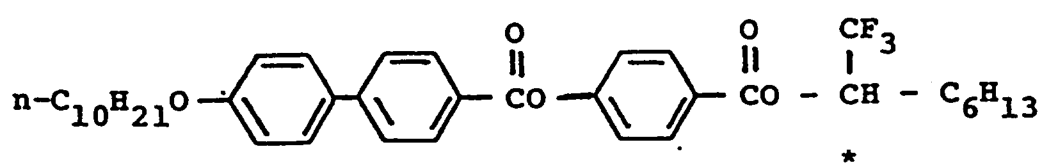

9. Flüssigkristallverbindung der nachfolgenden Formel, nämlich 4-(1,1,1-Trifluor-2-octyloxycarbonyl-)phenyl-4'-n-undecyloxybiphenyl-4-carboxylat, welche tristabile Zustände in der S(3)*-Phase zeigt.

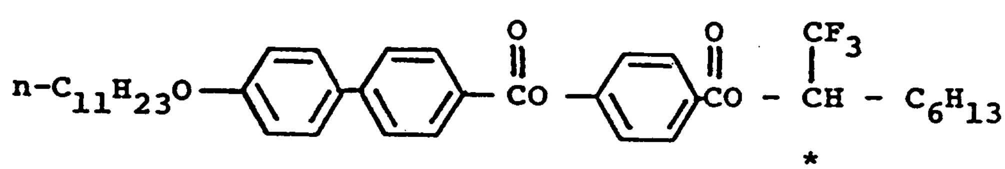

10. Flüssigkristallverbindung der nachfolgenden Formel, nämlich 4-(1,1,1-Trifluor-2-octyloxycarbonyl-)phenyl-4'-n-dodecyloxybiphenyl-4-carboxylat, welche tristabile Zustände in der S(3)*-Phase zeigt.

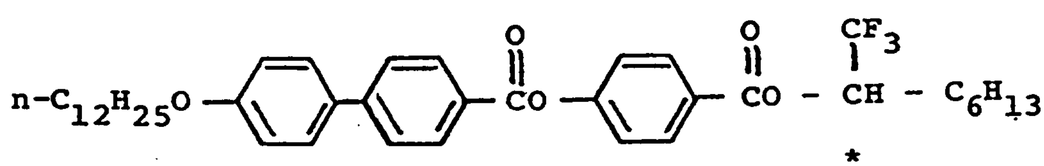

**11.** Flüssigkristallverbindung der nachfolgenden Formel, nämlich 4-(1,1,1-Trifluor-2-octyloxycarbonyl-)phenyl-4'-n-octylbiphenyl-4-carboxylat, welche tristabile Zustände in der S(3)*-Phase zeigt.

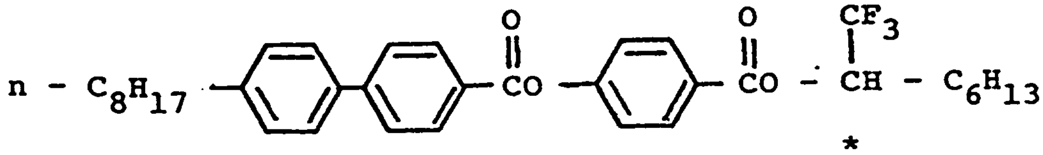

**12.** Flüssigkristallverbindung der nachfolgenden Formel, nämlich 4-(1,1,1-Trifluor-2-decyloxycarbonyl-)phenyl-4'-n-octyloxybipheny-4-carboxylat, welche tristabile Zustände in der S(3)*-Phase zeigt.

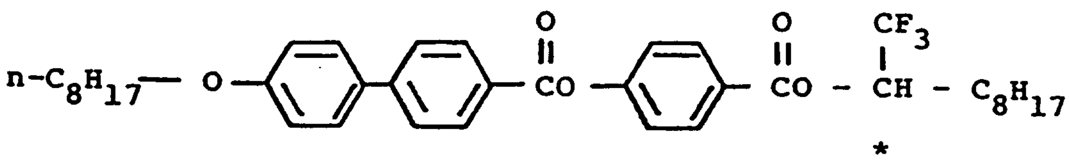

**13.** Flüssigkristallverbindung der nachfolgenden Formel, nämlich 4-(1,1,1,2,2-Pentafluor-3-undecyloxycarbonyl-)phenyl-4'-n-octyloxybiphenyl-4-carboxylat, welche tristabile Zustande in der S(3)*-Phase zeigt.

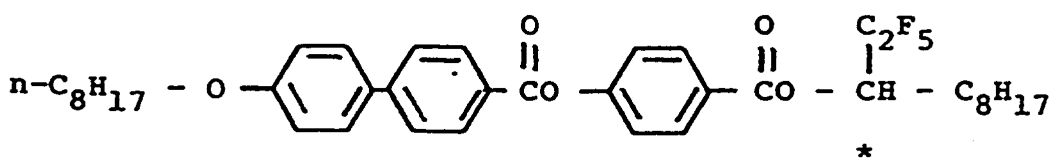

**14.** Flüssigkristallverbindung der in Anspruch 1 angegebenen Formel, nämlich 4-(1,1,1-Trifluor-2-octyloxycarbonyl-)biphenyl-4-n-octylbenzoat, welche tristabile Zustände in der S(3)*-Phase zeigt.

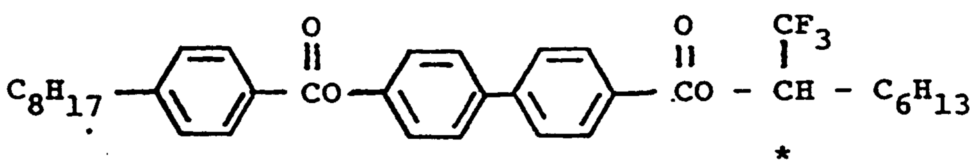

## Revendications

**1.** Cristal liquide représenté par la formule :

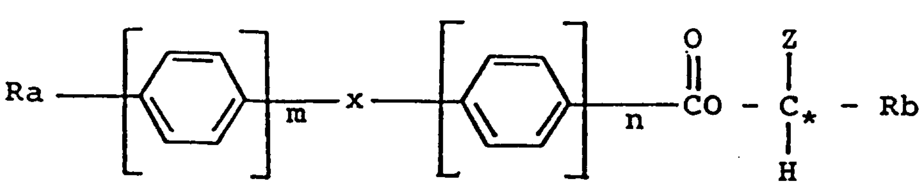 (I)

dans laquelle Ra signifie un groupe alcoyle de 1 à 20 atomes de carbone ou un groupe alcoxy de 1 à 20 atomes de carbone sous réserve Ra soit le groupe alcoyle quand m = 1 ; Rb signifie un groupe alcoyle aliphatique de 1 à

20 atomes de carbone ; X signifie

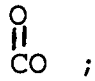

Z signifie un groupe alcoyle fluoré; m est 1 ou 2 ; n est 2 ou 1 et n + m = 3 ; * signifie un carbone optiquement actif et les cristaux liquides présentent un état tristable dans la phase S(3)*.

2. Cristal liquide suivant la revendication 1, qui est représenté par la formule (II) :

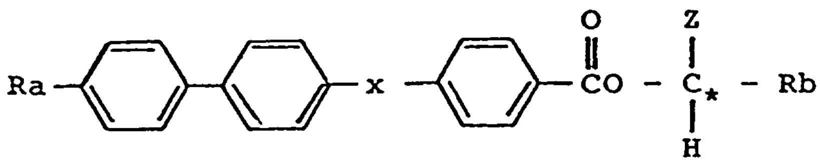 (II)

dans laquelle Ra signifie un groupe alcoyle de 3 à 16 atomes de carbone ou un groupe alcoxy de 3 à 16 atomes de carbone : Rb signifie un groupe alcoyle aliphatique de 3 à 16 atomes de carbone.

3. Cristal liquide suivant la revendication 1, qui est représenté par la formule (III)

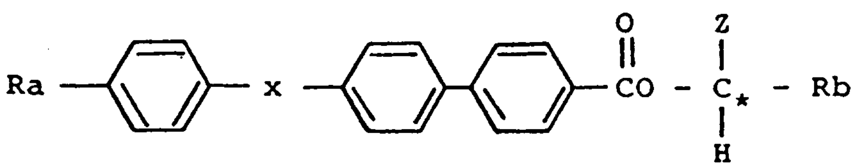 (III)

dans laquelle Ra un groupe alcoyle de 3 à 16 atomes de carbone ; Rb signifie un groupe alcoyle aliphatique de 3 à 16 atomes de carbone.

4. Cristal liquide suivant l'une quelconque des revendications 1 à 3, dans laquelle Z est un groupe choisi parmi $CF_3$, $CHF_2$, $CH_2F$, $C_2F_5$, $CClF_2$, $CCl_2F$, $CF_3CCl_2$ et $C_3F_7$.

5. Cristal liquide ayant la formule suivante, qui est le 4'-n-hexyloxybiphényl-4-carboxylate de 4-(1,1,1-trifluoro-2-octyloxy-carbonyl)phényle et qui présente des états tristables dans la phase S(3)*.

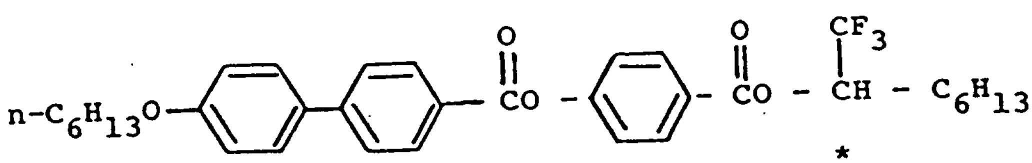

6. Cristal liquide ayant la formule suivante, qui est le 4'-n-octloxybiphényl-4-carboxylate de 4-(1,1,1-trifluoro-2-octyloxy-carbonyl)phényle et qui présente des états tristables dans la phase S(3)*.

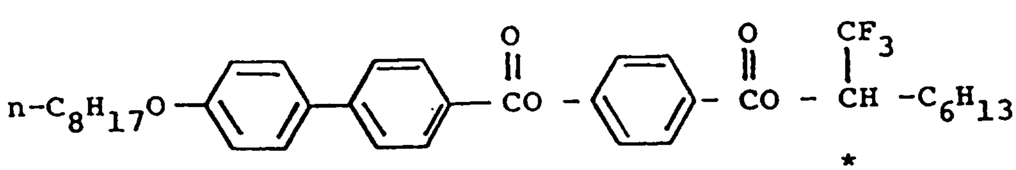

**7.** Cristal liquide ayant la formule suivante, qui est le 4'-n-nonyloxybiphényl-4-carboxylate de 4-(1,1,1-trifluoro-2-octyloxy-carbonyl)phényle et qui présente des états tristables dans la phase S(3)*.

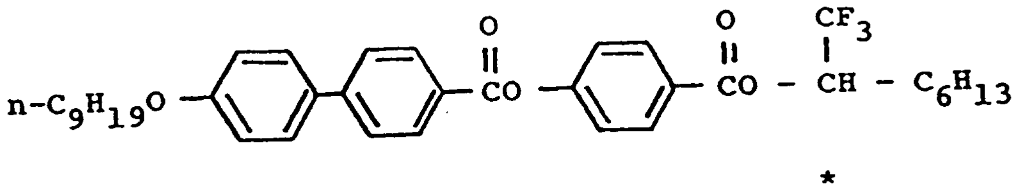

**8.** Cristal liquide ayant la formule suivante, qui est le 4'-n-décyloxybiphényl-4-carboxylate de 4-(1,1,1-trifluoro-2-octyloxy-carbonyl)phényle et qui présente des états tristables dans la phase S(3)*.

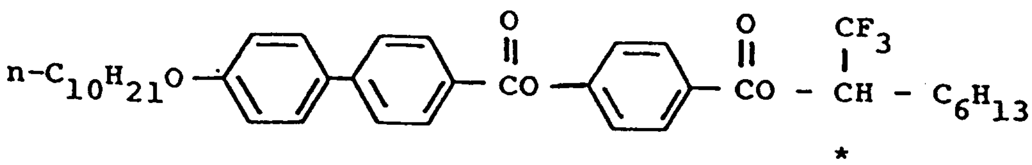

**9.** Cristal liquide ayant la formule suivante, qui est le 4'-n-undécyloxybiphényl-4-carboxylate de 4-(1,1,1-trifluoro-2-octyloxy-carbonyl)phényle et qui présente des états tristables dans la phase S(3)*.

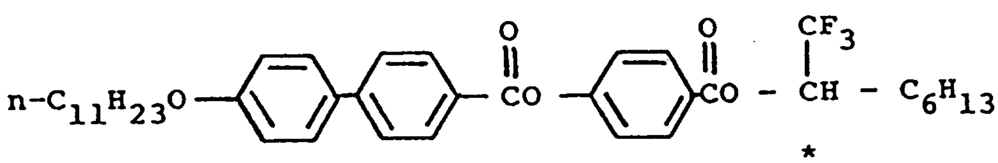

**10.** Cristal liquide ayant la formule suivante, qui est le 4'-n-dodécyloxybiphényl-4-carboxylate de 4-(1,1,1-trifluoro-2-octyloxy-carbonyl)phényle et qui présente des états tristables dans la phase S(3)*.

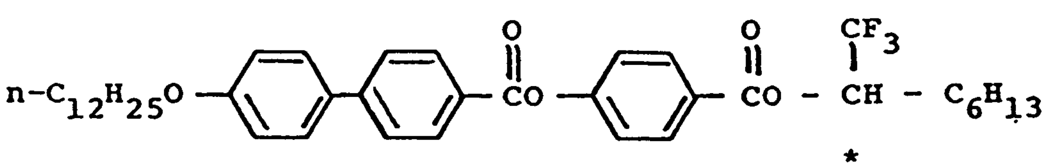

**11.** Cristal liquide ayant la formule suivante, qui est le 4'-n-octylbiphényl-4-carboxylate de 4-(1,1,1-trifluoro-2-octyloxy-carbonyl)phényle et qui présente des états tristables dans la phase S(3)*.

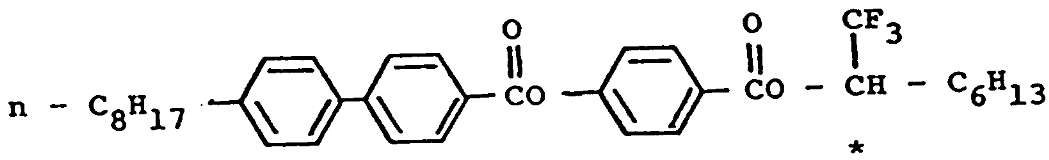

**12.** Cristal liquide ayant la formule suivante, qui est le 4'-n-octyloxybiphényl-4-carboxylate de 4-(1,1,1-trifluoro-2-décyloxy-carbonyl) phényle et qui présente des états tristables dans la phase S(3)*.

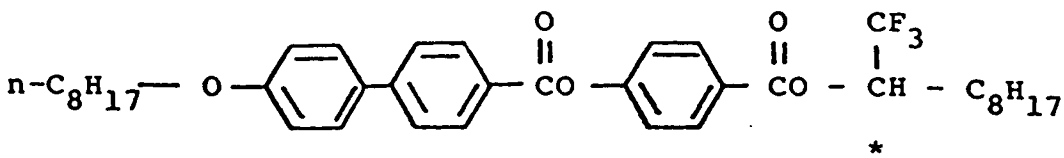

**13.** Cristal liquide ayant la formule suivante, qui est le 4'-n-octyloxybiphényl-4-carboxylate de 4-(1,1,1,2,2-pentafluoro-3-undécyloxycarbonyl)phényle et qui présente des états stristables dans la phase S(3)*.

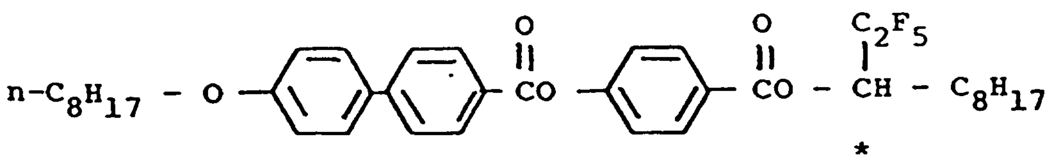

**14.** Cristal liquide suivant la formule de la revendication 1, qui est le 4-n-octylbenzoate de 4-(1,1,1-trifluoro-2-octyloxy-carbonyl)biphényle et qui présente des états tristables dans la phase S(3)*.

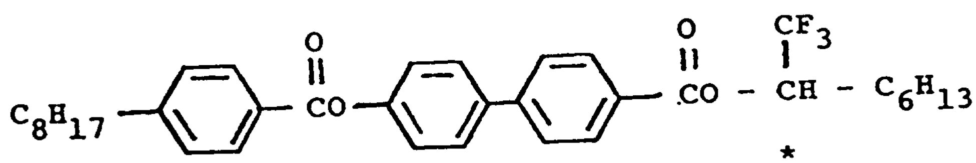

Fig. 1

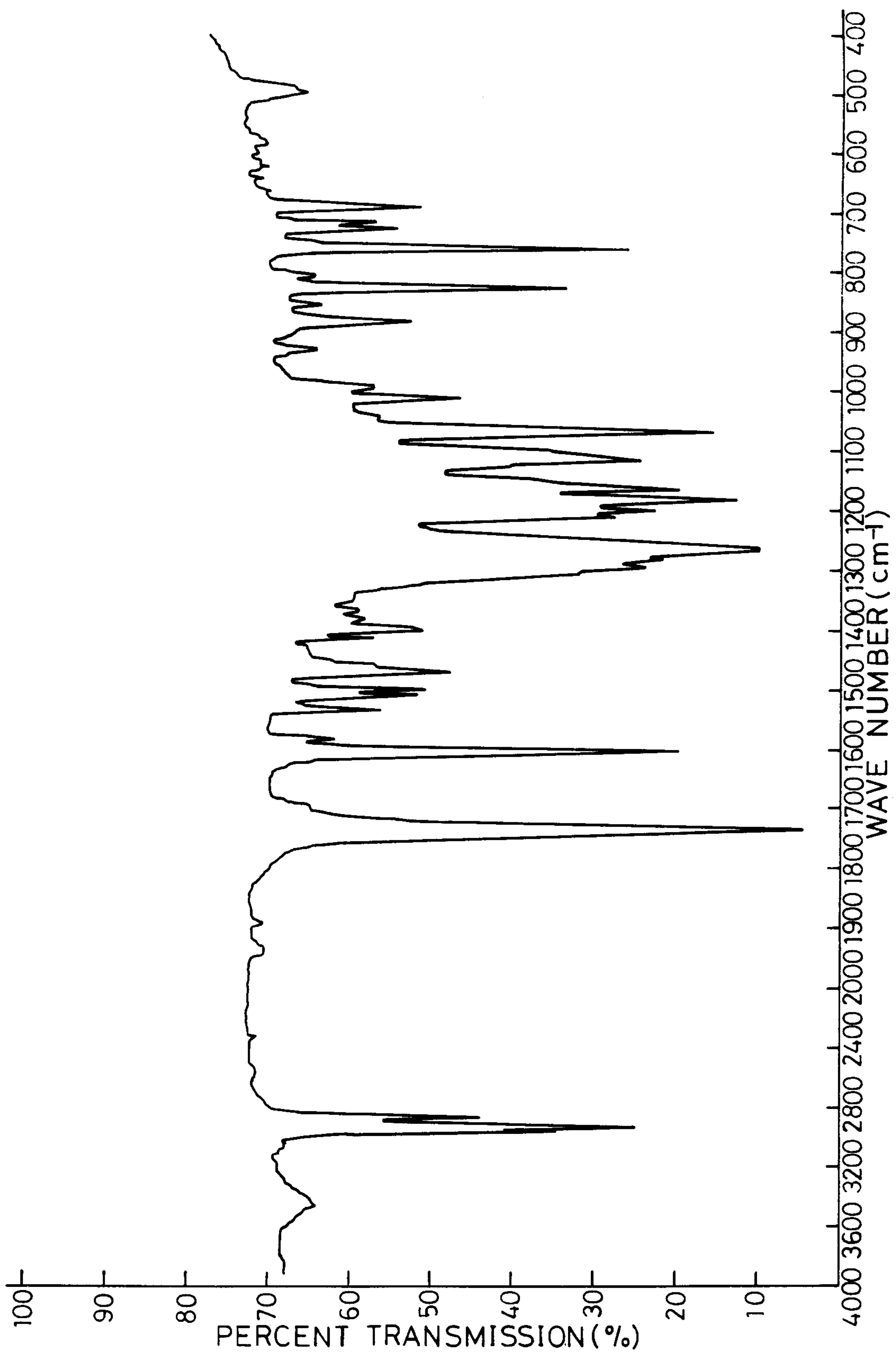

PERCENT TRANSMISSION (%)
100
90
80
70
60
50
40
30
20
10
WAVE NUMBER (cm⁻¹)
4000
3600
3200
2800
2400
2000
1900
1800
1700
1600
1500
1400
1300
1200
1100
1000
900
800
700
600
500
400

Fig. 2

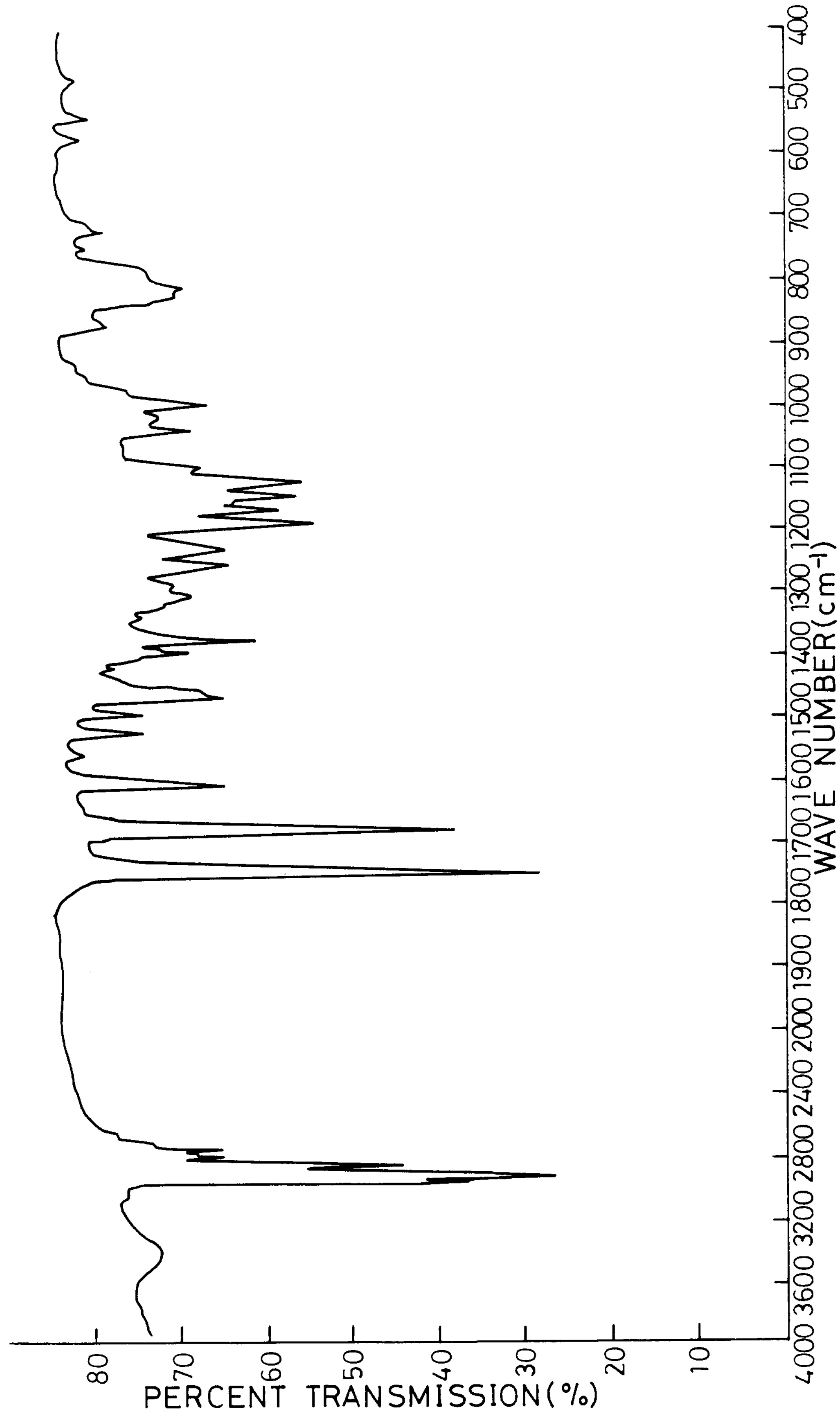
PERCENT TRANSMISSION(%)
80 70 60 50 40 30 20 10
WAVE NUMBER(cm$^{-1}$)
4000 3600 3200 2800 2400 2000 1900 1800 1700 1600 1500 1400 1300 1200 1100 1000 900 800 700 600 500 400

Fig.3

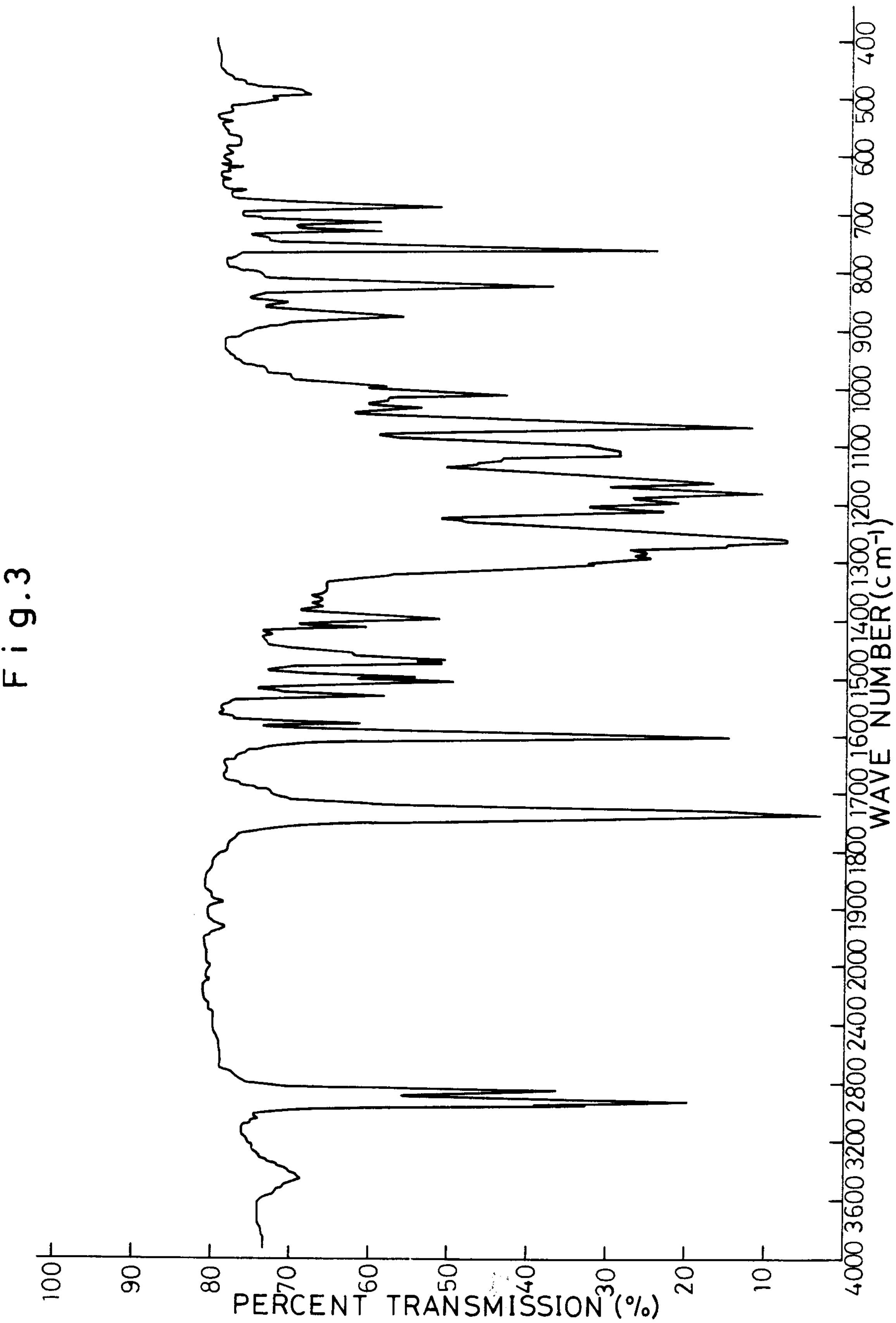
PERCENT TRANSMISSION (%)
100
90
80
70
60
50
40
30
20
10
WAVE NUMBER (cm-1)
4000
3600
3200
2800
2400
2000
1900
1800
1700
1600
1500
1400
1300
1200
1100
1000
900
800
700
600
500
400

Fig.4

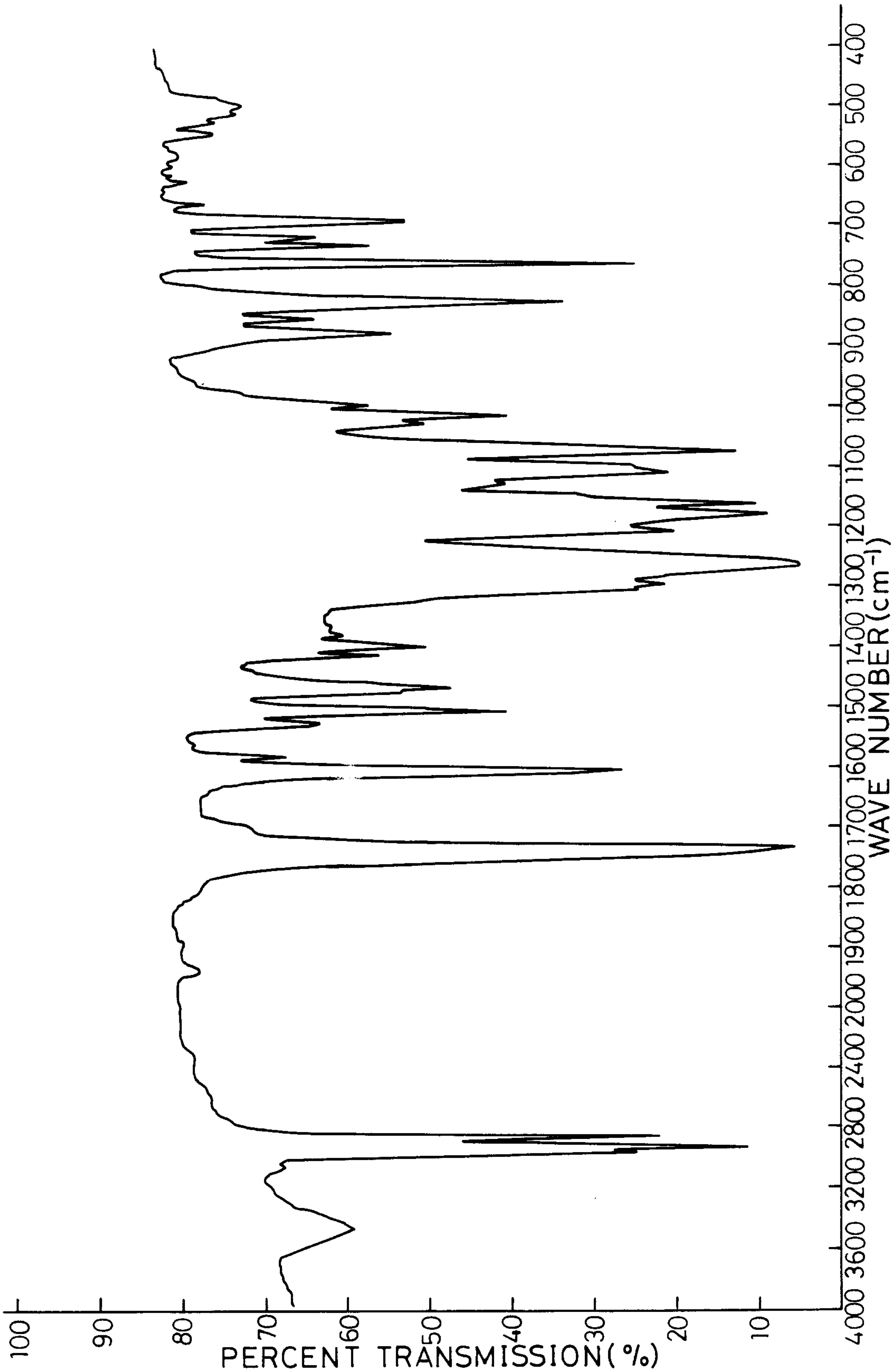
PERCENT TRANSMISSION(%)
100 90 80 70 60 50 40 30 20 10
WAVE NUMBER($cm^{-1}$)
4000 3600 3200 2800 2400 2000 1900 1800 1700 1600 1500 1400 1300 1200 1100 1000 900 800 700 600 500 400

Fig.5

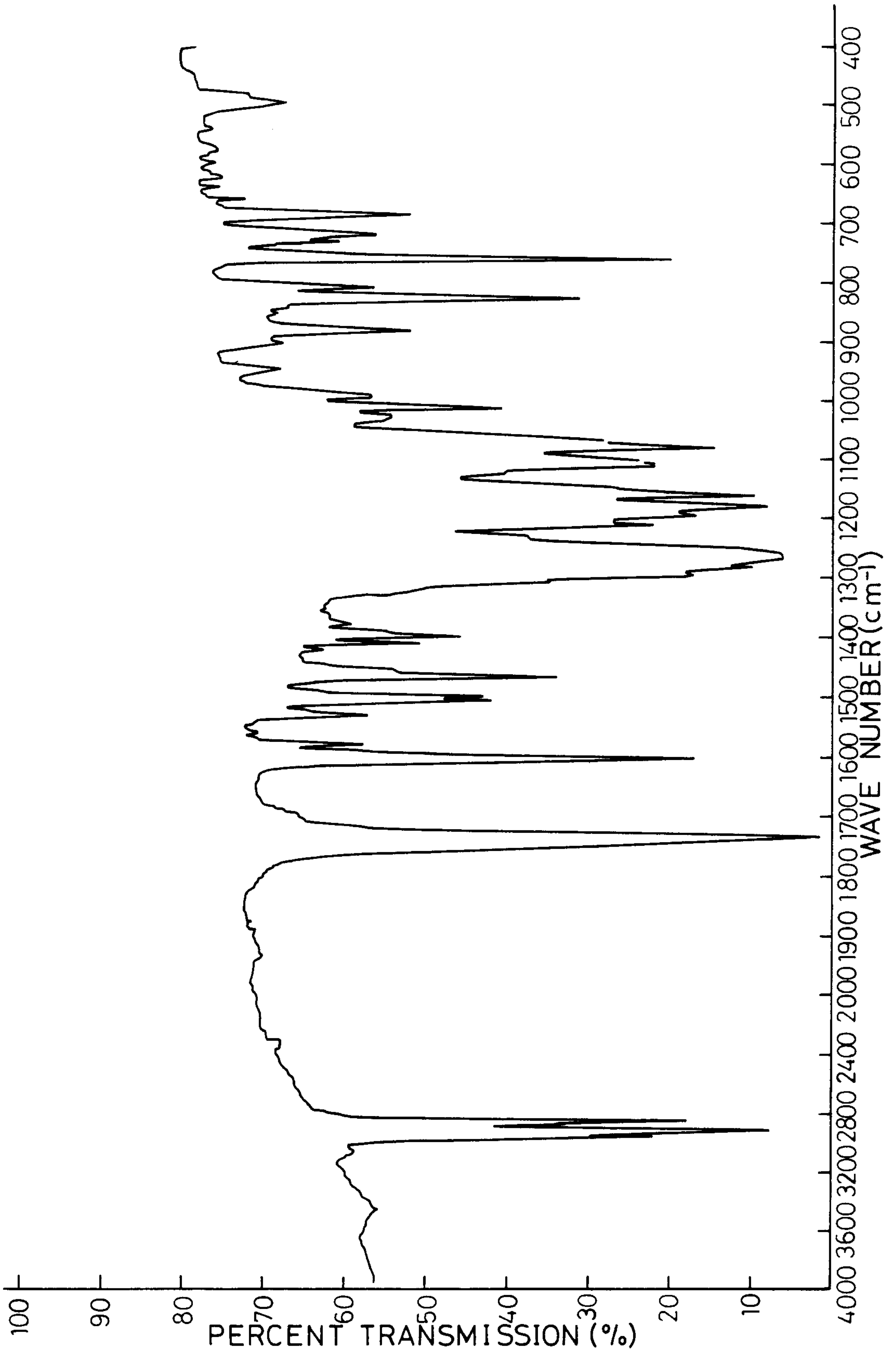
PERCENT TRANSMISSION (%)
100
90
80
70
60
50
40
30
20
10
WAVE NUMBER (cm⁻¹)
4000
3600
3200
2800
2400
2000
1900
1800
1700
1600
1500
1400
1300
1200
1100
1000
900
800
700
600
500
400

Fig. 6

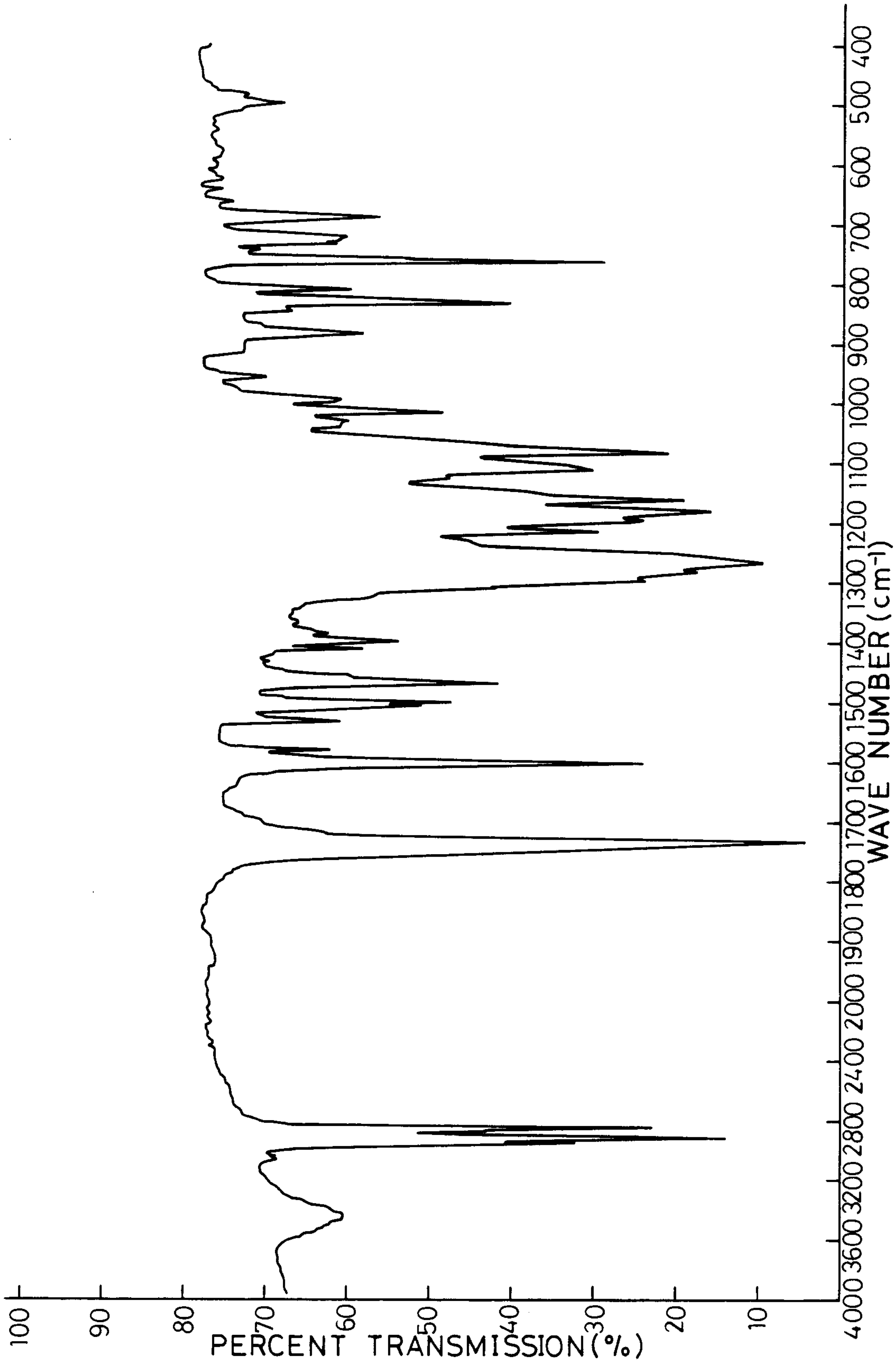
PERCENT TRANSMISSION (%)
100
90
80
70
60
50
40
30
20
10
WAVE NUMBER (cm-1)
4000
3600
3200
2800
2400
2000
1900
1800
1700
1600
1500
1400
1300
1200
1100
1000
900
800
700
600
500
400

Fig. 7

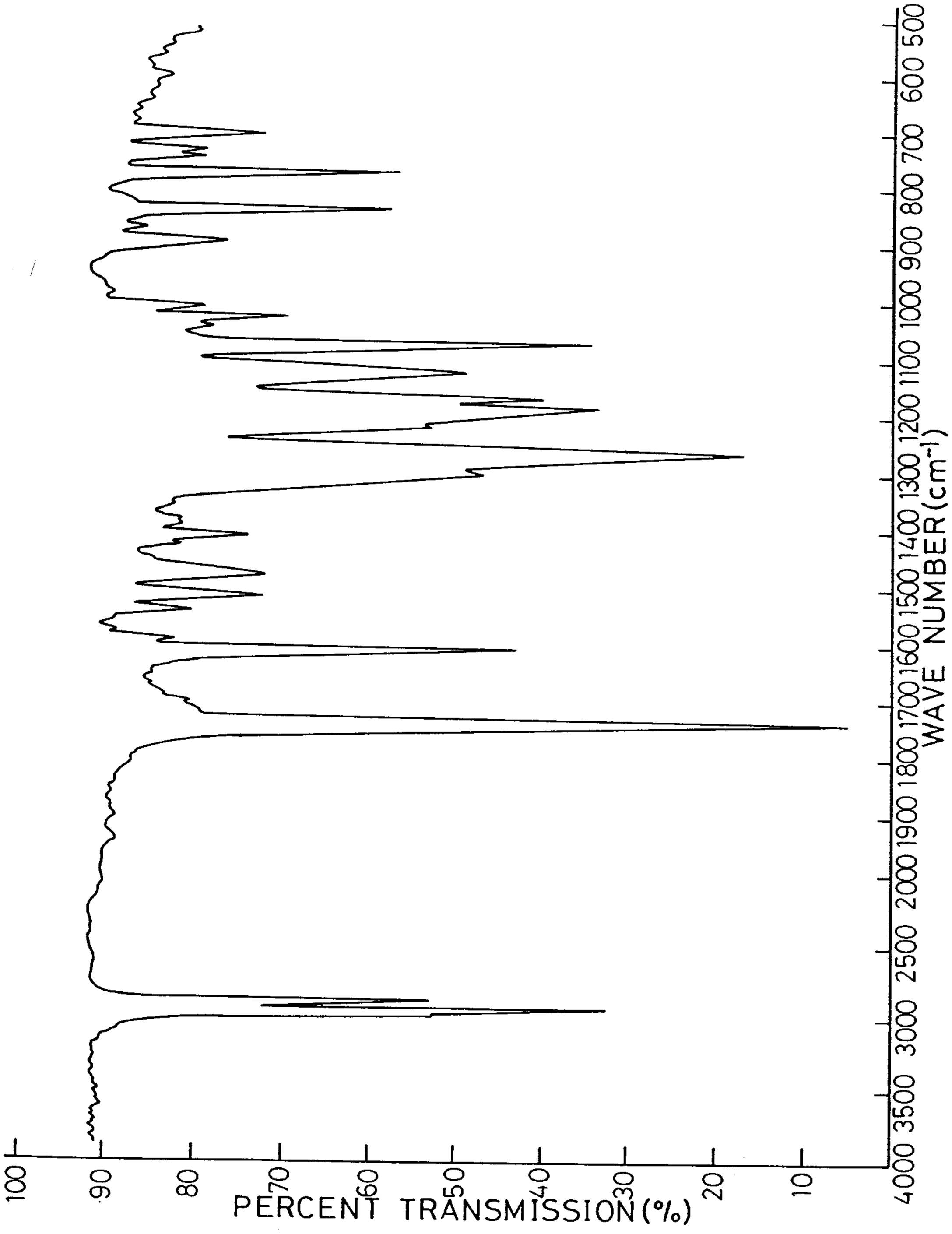
PERCENT TRANSMISSION (%)
100
90
80
70
60
50
40
30
20
10
WAVE NUMBER (cm$^{-1}$)
4000
3500
3000
2500
2000
1900
1800
1700
1600
1500
1400
1300
1200
1100
1000
900
800
700
600
500

Fig.8

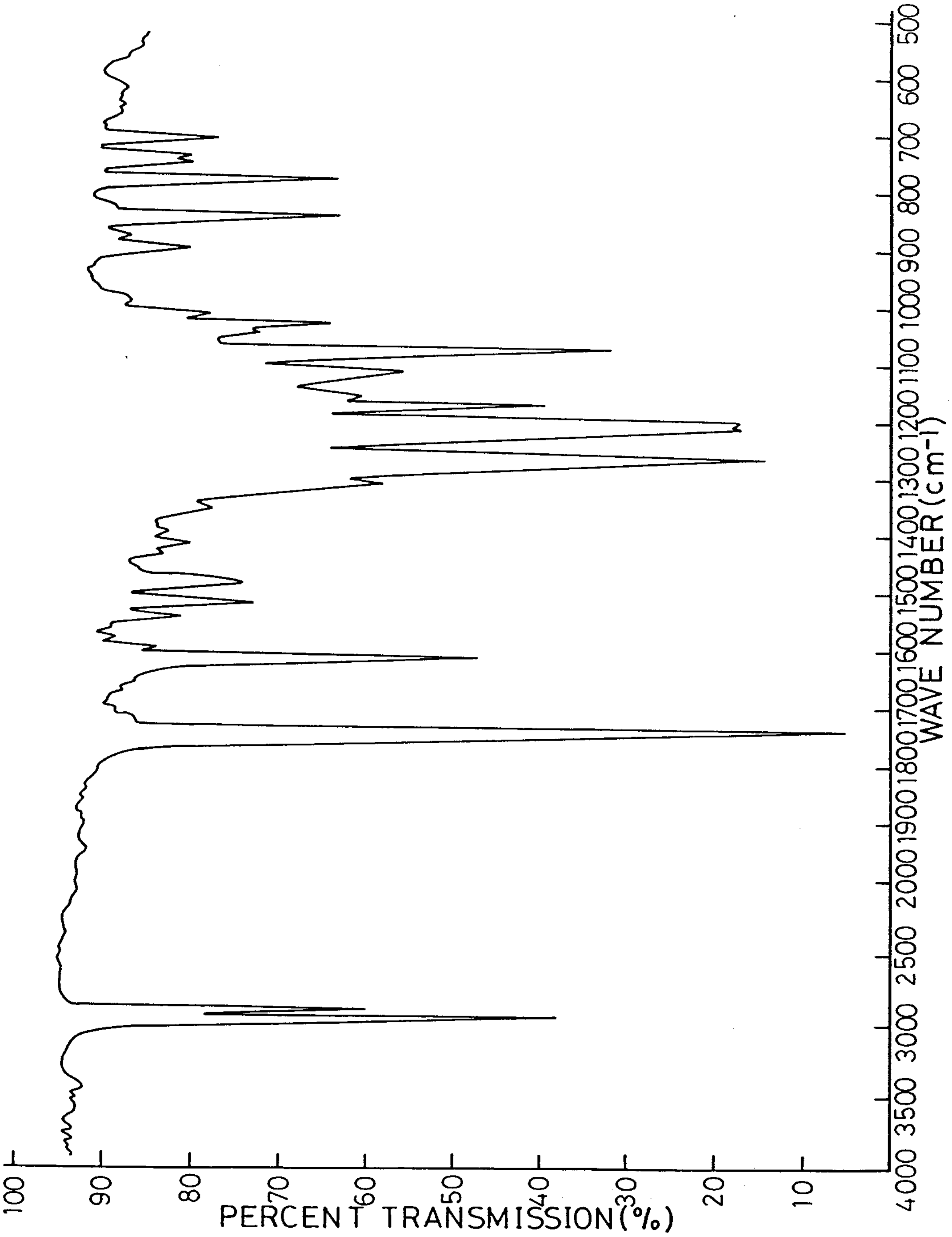
PERCENT TRANSMISSION(%)
100
90
80
70
60
50
40
30
20
10
WAVE NUMBER (cm-1)
4000
3500
3000
2500
2000
1900
1800
1700
1600
1500
1400
1300
1200
1100
1000
900
800
700
600
500

Fig.9

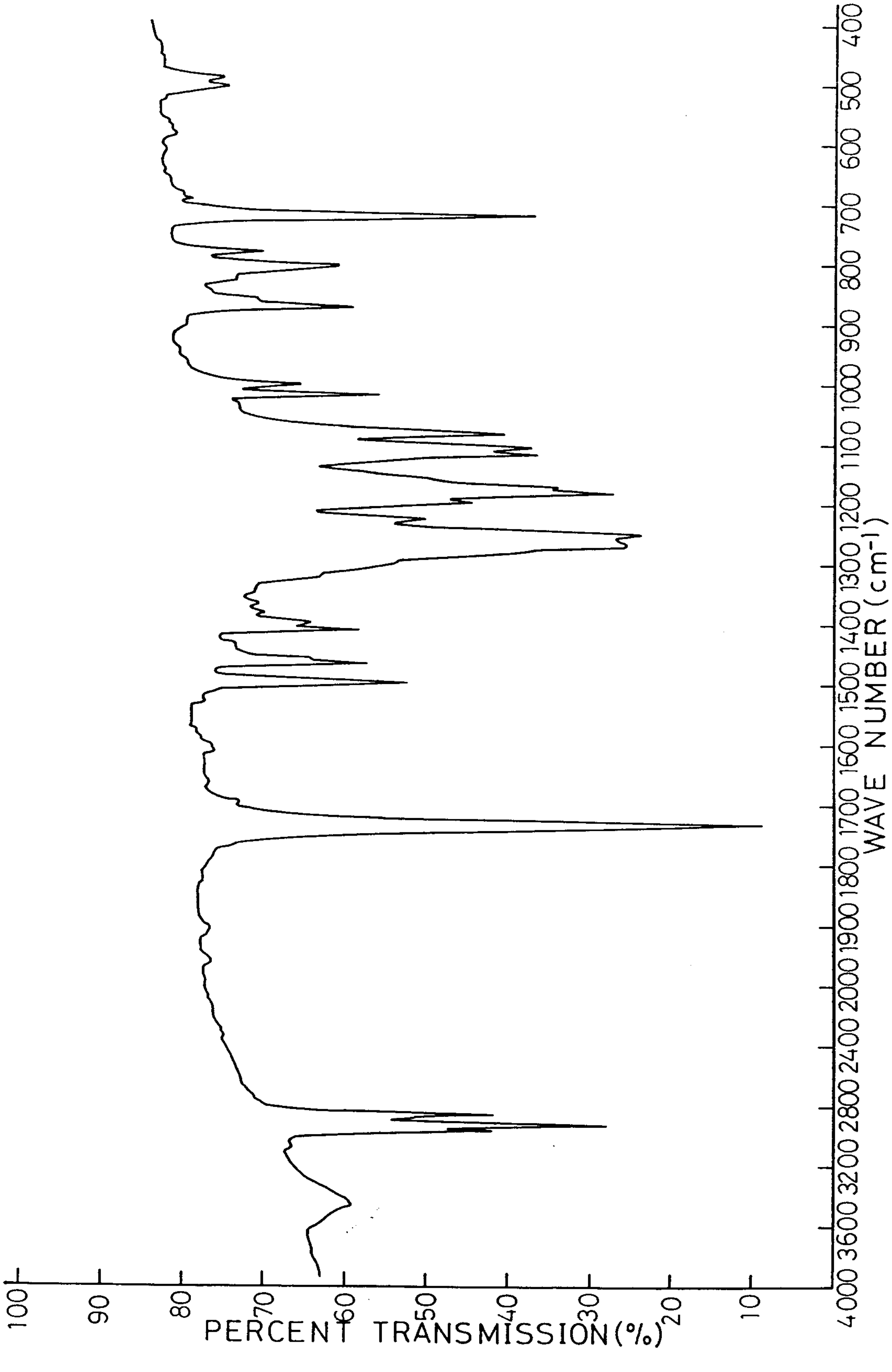
PERCENT TRANSMISSION(%)
100
90
80
70
60
50
40
30
20
10
WAVE NUMBER (cm$^{-1}$)
4000
3600
3200
2800
2400
2000
1900
1800
1700
1600
1500
1400
1300
1200
1100
1000
900
800
700
600
500
400

Fig.10

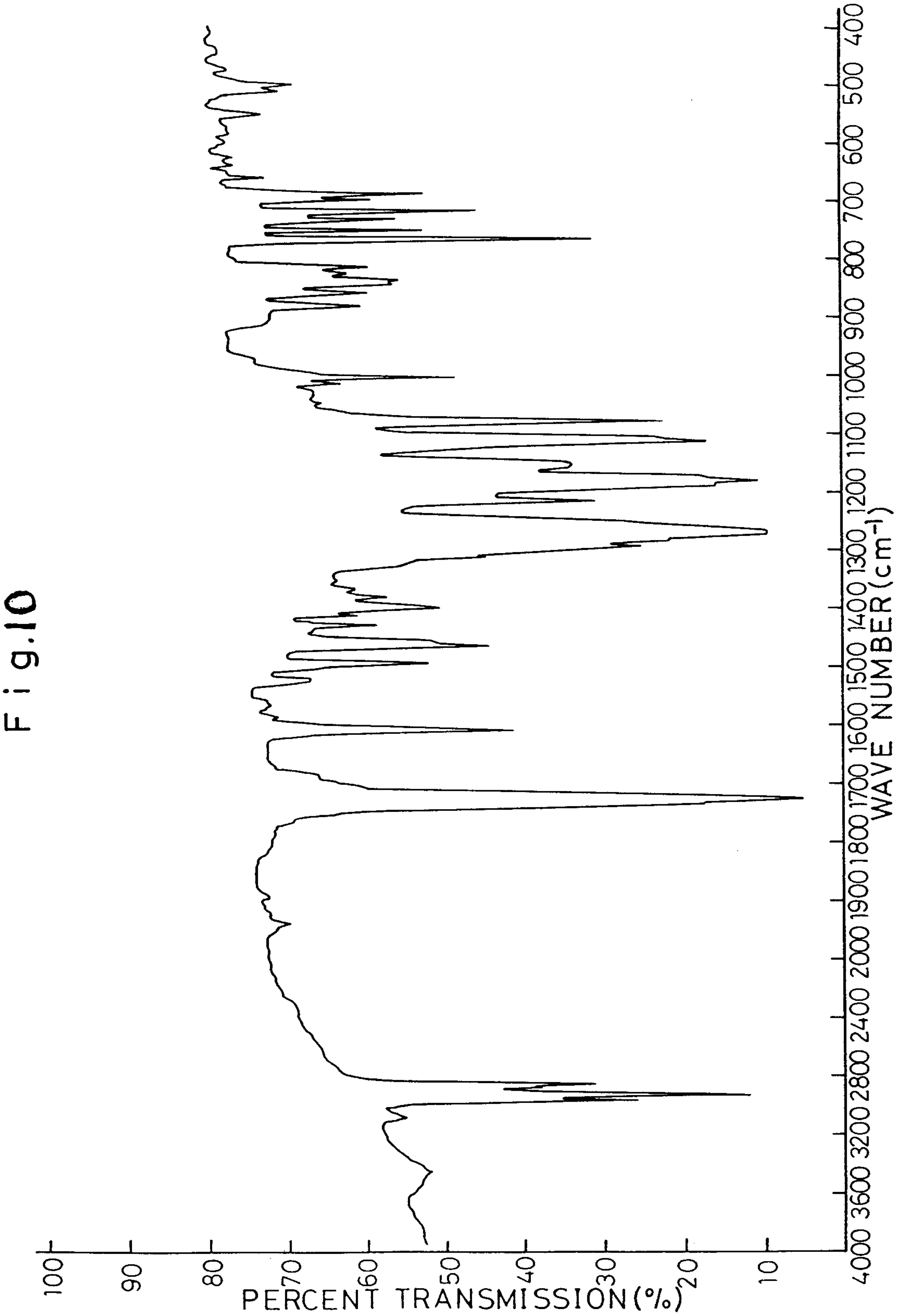
PERCENT TRANSMISSION(%)
100
90
80
70
60
50
40
30
20
10
WAVE NUMBER(cm$^{-1}$)
4000
3600
3200
2800
2400
2000
1900
1800
1700
1600
1500
1400
1300
1200
1100
1000
900
800
700
600
500
400